(19) Europäisches Patentamt
European Patent Office
Office européen des brevets

(11) EP 3 066 161 B1

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(21) Anmeldenummer: **14789247.5**

(22) Anmeldetag: **23.10.2014**

(51) Int Cl.:
***C09D 4/00*** *(2006.01)* ***C09J 4/00*** *(2006.01)*

(86) Internationale Anmeldenummer:
**PCT/EP2014/072726**

(87) Internationale Veröffentlichungsnummer:
**WO 2015/067478 (14.05.2015 Gazette 2015/19)**

(54) **BESCHICHTUNGEN ZUR VERWENDUNG ALS KLEBSTOFF**

COATINGS FOR USE AS ADHESIVE

REVETEMENTS UTILISES COMME ADHESIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2013 EP 13191636**

(43) Veröffentlichungstag der Anmeldung:
**14.09.2016 Patentblatt 2016/37**

(73) Patentinhaber: **Construction Research & Technology GmbH**
**83308 Trostberg (DE)**

(72) Erfinder:
- **WALTHER, Burkhard**
**83373 Taching am See (DE)**
- **FEICHTENSCHLAGER, Bernhard**
**83278 Traunstein (DE)**
- **WÖLFLE, Heimo**
**83278 Traunstein (DE)**
- **BRUCHMANN, Bernd**
**67251 Freinsheim (DE)**
- **SMEETS, Alfons**
**83358 Seebruck (DE)**

(74) Vertreter: **BASF IP Association**
**BASF SE**
**G-FLP-C006**
**67056 Ludwigshafen (DE)**

(56) Entgegenhaltungen:
**WO-A1-2005/057286** **WO-A1-2011/006947**
**WO-A1-2011/141424**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 066 161 B1

**Beschreibung**

Die Erfindung betrifft durch Addition von Mercaptogruppen an Acrylate und/oder durch Strahlungshärtung erhältliche Beschichtungen mit guten Eigenschaften, Verfahren zu deren Herstellung und deren Verwendung.

Durch Strahlungshärtung erhältliche Beschichtungen sind seit Langem bekannt. Nachteilig an derartigen Beschichtungen ist, daß die Anwesenheit von Sauerstoff während der Härtung die radikalische Polymerisierung stört, so daß beste Härtungsergebnisse in der Regel eine Härtung unter Inertgas erfordern. Zudem findet in Bereichen zumeist keine oder nur eine geringe Härtung statt, wo nicht per (UV)-Licht mit Hilfe eines Photoinitiators Radikale induziert werden können, also in sogenannten Schattenbereichen.

Dies kann gelöst werden durch einen weiteren Härtungsmechanismus zusätzlich zur Strahlungshärtung.

Aus US 6,551,710 B1 ist bekannt, strahlungshärtbare Acrylate mit Thiolgruppen enthaltenden Verbindungen reagieren zu lassen.

Nachteilig an diesen Systemen ist, daß die Beschichtungsmassen aus Lösungsmitteln aufgetragen werden und somit einen hohen VOC-Wert aufweisen, und daß die Mischungen aus UV-härtbarer Verbindung und Di- und Polythiol Komponente zur sofortigen Reaktion miteinander vermischt werden und somit keine Lagerfähigkeit besitzen.

Reaktive Mischungen aus Acrylaten und Thiolverbindungen sind auch bekannt aus EP 1275668. Auch hier werden die Mischungen zur sofortigen Reaktion angesetzt, eine Lagerung und Lagerfähigkeit ist nicht vorgesehen.

A.K. O'Brian, N.B. Cramer, C.N. Bowman, beschreiben in "Oxygen inhibition in Thiol-Acrylate Photopolymerizations", J. Polym. Sci., Part A: Polym. Chem. 2006, 44, 2007-2014 den Einfluß der Anwesenheit von Sauerstoff ($O_2$) auf die Copolymerisation von Acrylaten mit Thiolen in Substanz. Höherfunktionelle Thiole führen bei gleicher Konzentration an Thiolfunktionalitäten zu einer schnelleren Polymerisation, was die Stabilisierung des Systems noch schwieriger macht.

Als ein Beschichtungssystem, das durch die Anwesenheit von Sauerstoff in der Härtung weitgehend unbeeinflußt bleibt, sind Zweikomponenten Epoxyharze bekannt. Diese erfordern jedoch zur Härtung häufig toxische Amine und reagieren bei niedrigen Temperaturen nur noch sehr langsam.

Um eine Reaktion zwischen Thiolverbindungen und doppelbindungshaltigen Systemen zu vermindern ist es nach der Lehre der US 5,459,173 erforderlich, diese zu stabilisieren.

WO 2012/126695 beschreibt lagerstabile Mischungen aus Polyacrylaten und Polythiolen. Die beschriebenen Mischungen weisen eine zufriedenstellende Lagerstabilität auf, jedoch ist die Haftung der erhaltenen Beschichtungen auf Oberflächen zu gering.

Aus WO 2005/057286 sind $\alpha$-(1'-Hydroxyalkyl)acrylate bekannt, die durch die Reaktion von Di- oder Polyacrylaten mit Aldehyden oder Di- oder Polyaldehyden mit Monoacrylaten erhalten werden. Dieser Reaktionstyp ist auch bekannt als Baylis-Hillman-Reaktion. Diese Produkte sind durch Strahlungshärtung oder durch Reaktion mit Isocyanaten in einer Dual-Cure-Reaktion härtbar.

Aus WO 2011/141424 sind Hydroxygruppen und Acrylatgruppen aufweisende verzweigte Polymere (S) mit $\alpha$-(1'-Hydroxyalkyl)acrylatgruppen, bekannt, die erhältlich sind durch Reaktion mindestens einer Carbonylverbindung (A), ausgewählt aus der Gruppe bestehend aus

- Carbonylverbindungen (Ax) mit mehr als zwei Carbonylgruppen und,
- Dicarbonylverbindungen (A2) mit genau zwei Carbonylgruppen, wobei die Carbonylgruppen sowohl in (A2) als auch in (Ax) jeweils unabhängig voneinander ausgewählt sind aus der Gruppe bestehend aus
- Aldehydgruppen und
- Ketogruppen

und
mindestens einer Acrylatverbindung (B), ausgewählt aus der Gruppe bestehend aus

- Acrylatverbindungen (By) mit mehr als zwei Acrylatgruppen und
- Diacrylatverbindungen (B2),

mit der Maßgabe, daß die mittlere Funktionalität der Carbonylgruppen-enthaltenden Verbindungen (A) und/oder die mittlere Funktionalität der Acrylatgruppen-enthaltenden Verbindungen (B) mehr als 2 beträgt.

Ebenfalls offenbart wird die Härtung derartiger Polymere durch Strahlungs- oder Dual-Cure-Härtung.

Aufgabe der vorliegenden Erfindung war es, Beschichtungsmassen zur Verfügung zu stellen, die auch bei niedrigen Temperaturen durch Reaktion der Komponenten miteinander aushärten und Beschichtungen mit guten Eigenschaften ergeben.

Die Aufgabe wurde gelöst durch Beschichtungsmassen, enthaltend

- mindestens eine Verbindung (S) mit mindestens zwei α-(1'-Hydroxyalkyl)acrylatgruppen,
- optional mindestens eine Verbindung (S1) mit einer α-(1'-Hydroxyalkyl)acrylatgruppe,
- mindestens eine Verbindung (C), die mindestens zwei Thiolgruppen trägt,
- optional mindestens einen Reaktivverdünner (D) mit einem zahlenmittleren Molekulargewicht $M_n$ von weniger als 1000 g/mol, der mindestens zwei (Meth)Acrylatgruppen aufweis,
- optional mindestens einen Katalysator (E2), der die Anlagerung von Thiolgruppen an Acrylatgruppen zu beschleunigen vermag, und
- optional mindestens einem Photoinitiator (F).

Es stellt einen Vorteil der erfindungsgemäßen Beschichtungsmassen dar, daß sie als Lacke Überzüge, Dichtmassen, Korrosionschutzmassen und/oder als Klebstoffe mit hoher Adhesivität und niedriger Härtungstemperatur einsetzbar sind.

Insbesondere sind die Beschichtungsmassen wie in Ansprüchen 2 bis 13, deren Verwendung als Klebstoff wie im Anspruch 14, Verfahren zur deren Herstellung wie im Anspruch 15 und Verfahren zur deren Härtung wie im Asnpruch 16 definiert. Unter den Verbindungen (S) die α-(1'-Hydroxyalkyl)acrylatgruppen tragen, wird unterschieden zwischen solchen Verbindungen (S1), die genau eine α-(1'-Hydroxyalkyl)acrylatgruppe tragen, also durch Reaktion eines Monoacrylats mit einer Monocarbonylverbindung erhältlich sind (siehe unten), Verbindungen (S2) mit mindestens zwei α-(1'-Hydroxyalkyl)acrylatgruppen, erhältlich durch Reaktion eines Di- oder höherfunktionellen Acrylats mit Monocarbonylverbindungen bzw. durch Reaktion von Verbindungen mit genau einer Acrylatgruppe und Verbindungen mit mindestens zwei Carbonylgruppen (siehe unten) und Verbindungen (Sz), die durch Reaktion einer Verbindung mit mindestens zwei Acrylatgruppen und Verbindungen mit mindestens zwei Carbonylgruppen erhältlich sind.

Die Verbindungen (S1) fungieren dabei als niedermolekulare Monomere in der Beschichtungsmasse, die zum gewünschten Molekulargewichtsaufbau und damit zur Verminderung der Flüchtigkeit der Einzelkomponenten im System, aber nicht zur Vernetzung beitragen, wohingegen (S2) und (Sz) durch ihre Funktionalität von mindestens 2 bezogen auf aktivierte Doppelbindungen zu einer Vernetzung in der Beschichtung führen.

Die Verbindungen (S2) sind im Vergleich zu den Verbindungen (Sz) in der Regel keine Polymere.

Geeignete Verbindungen (S) können eine oder mehrere, beispielsweise 1 bis 10, bevorzugt 1 bis 6, besonders bevorzugt 1 bis 4, ganz besonders bevorzugt 2 bis 4 und insbesondere 3 bis 4 α-(1'-Hydroxyalkyl)acrylatgruppen tragen. Es kann sich auch um ein Gemisch von Verbindungen handeln, die dann im statistischen Mittel die geforderte Funktionalität aufweisen. Die geforderte mittlere Funktionalität bezüglich α-(1'-Hydroxyalkyl)acrylatgruppen soll dabei größer 1 sein, bevorzugt im Mittel zwischen 1,1 und 10, besonders bevorzugt zwischen 1,1 und 8, ganz besonders bevorzugt zwischen 1,3 und 8 und speziell zwischen 1,3 und 6.

Das zahlenmittlere Molekulargewicht $M_n$ dieser Verbindungen (S), bestimmt durch Gelpermeationschromatographie mit Tetrahydrofuran als Elutionsmittel und Polymethylmethacrylat (PMMA) als Standard, kann beispielsweise bis zu 5000, bevorzugt von 200 bis zu 3000, besonders bevorzugt zwischen 250 und 2000 und insbesondere zwischen 300 und 1500 g/mol betragen.

Die Polydispersität (Quotient aus zahlenmittlerem Molekulargewicht $M_n$ und gewichtsmittlerem Molekulargewicht $M_w$) der Verbindungen (S) beträgt in der Regel von 1,1 bis 30, bevorzugt 1,2 bis 20, besonders bevorzugt 1,2 bis 15, ganz besonders bevorzugt bis 10. Speziell kann die Polydispersität bis 5 und sogar bis 3 betragen.

Die Methode zur Bestimmung der Polydispersität ist im Analytiker Taschenbuch Bd. 4, Seiten 433 bis 442 , Berlin 1984 beschrieben.

Beispiele für solche α-(1'-Hydroxyalkyl)acrylate (S) sind Verbindungen, die erhältlich sind durch Umsetzung eines ein- oder mehrfunktionellen Acrylats mit einer ein- oder mehrfunktionellen Carbonylverbindung.

Beispiele für Carbonylverbindungen sind Aldehyde oder Ketone, bevorzugt Aldehyde.

Die Verbindungen (S1) sind erhältlich durch Umsetzung eines monofunktionellen Acrylats (I) mit einer monofunktionellen Carbonylverbindung (II).

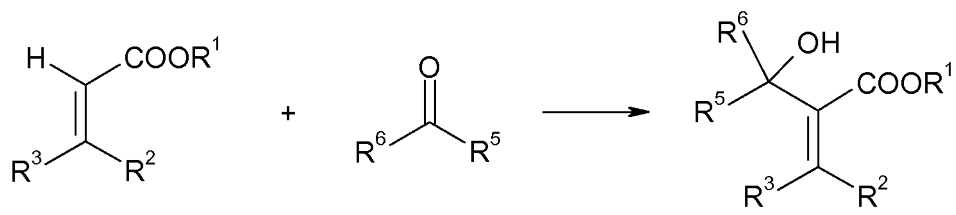

(I) (II) (III)

Die Verbindungen (S2) sind erhältlich durch Umsetzung eines di- oder höherfunktionellen Acrylats (IV) mit einer monofunktionellen Carbonylverbindung (II).

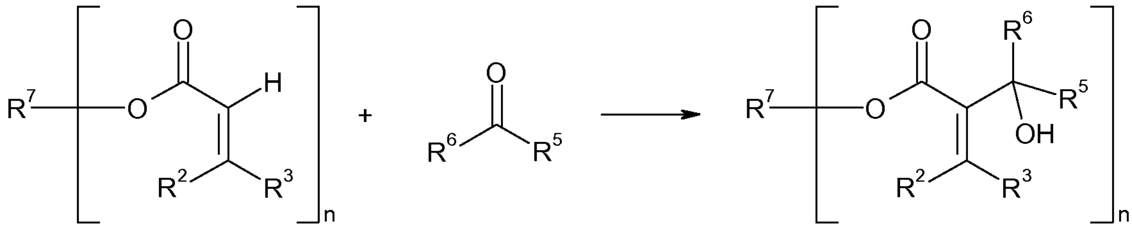

(IV) (II) (V)

Weitere Verbindungen (S2) sind erhältlich durch Umsetzung eines monofunktionellen Acrylats (I) mit einer di- oder höherfunktionellen Carbonylverbindung (VI).

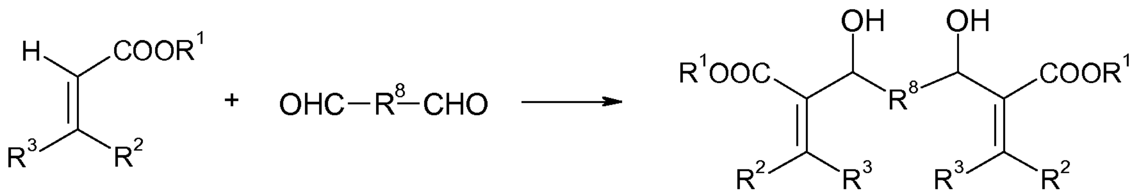

(I) (VI) (VII)

Darin bedeuten

$R^1$, $R^2$ und $R^3$ unabhängig voneinander $C_1$ - $C_{18}$-Alkyl, gegebenenfalls durch ein oder mehrere Sauerstoff- und/oder Schwefelatome und/oder ein oder mehrere substituierte oder unsubstituierte Iminogruppen unterbrochenes $C_2$ - $C_{18}$-Alkyl, $C_2$ - $C_{18}$-Alkenyl, $C_6$ - $C_{12}$-Aryl, $C_5$ - $C_{12}$-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können,
$R^2$ und/oder $R^3$ zusätzlich Wasserstoff, gegebenenfalls durch Aryl, Alkyl, Aryloxy, Alkyloxy, Heteroatome und/oder Heterocyclen substituiertes $C_1$ - $C_{18}$-Alkoxy oder-$COOR^4$,
$R^2$ kann zusätzlich zusammen mit $R^1$ einen Ring bilden, in diesem Fall kann $R^2$ eine Carbonylgruppe bedeuten, so daß die Gruppe $COOR^1$ und $R^2$ gemeinsam eine Säureanhydridgruppe - (CO)-O-(CO)- bilden,
$R^4$ hat die gleiche Bedeutung wie für $R^1$ aufgeführt, kann jedoch von diesem verschieden sein,
$R^5$ und $R^6$ unabhängig voneinander Wasserstoff, $C_1$ - $C_{18}$-Alkyl, gegebenenfalls durch ein oder mehrere Sauerstoff- und/oder Schwefelatome und/oder ein oder mehrere substituierte oder unsubstituierte Iminogruppen unterbrochenes $C_2$ - $C_{18}$-Alkyl, $C_2$ - $C_{18}$-Alkenyl, $C_6$ - $C_{12}$-Aryl, $C_5$ - $C_{12}$-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, oder können gemeinsam einen Ring bilden,
n eine positive ganze Zahl von 2 bis 10,
$R^7$ einen n-wertigen organischen Rest mit 1 bis 50 Kohlenstoffatomen, der unsubstituiert oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxy oder hydroxysubstituiertem $C_1$-$C_8$-Alkyl substituiert sein und/oder eine oder mehrere -(CO)-, -O(CO)O-, -(NH)(CO)O-, -O(CO)(NH)-, -O(CO)- oder -(CO)O-Gruppen aufweisen kann und
$R^8$ bedeutet unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_6$-$C_{12}$-Arylen, $C_3$-$C_{12}$-Cycloalkylen, $C_1$-$C_{20}$-Alkylen oder durch ein- oder mehrere Sauerstoff- und/oder Schwefelatome und/oder ein oder mehrere substituierte oder unsubstituierte Iminogruppen und/oder durch eine oder mehrere -(CO)-, -O(CO)O-, -(NH)(CO)O-, -O(CO)(NH)-, -O(CO)- oder -(CO)O-Gruppen unterbrochenes $C_2$-$C_{20}$-Alkylen oder eine Einfachbindung.

Darin bedeuten
gegebenenfalls durch Aryl, Alkyl, Aryloxy, Alkyloxy, Heteroatome und/oder Heterocyclen substituiertes $C_1$ - $C_{18}$-Alkyl

beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,

gegebenenfalls durch Aryl, Alkyl, Aryloxy, Alkyloxy, Heteroatome und/oder Heterocyclen substituiertes $C_1$ - $C_{18}$-Alkoxy beispielsweise Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-tri-oxononyl, 12-Hydroxy-1,4,7,10-tetraoxododecyl, 6-Methoxy-1,4-dioxohexyl, 9-Methoxy-1,4,7-tri-oxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-tri-oxooctyl, 16-Hydroxy-1,5,9,13-tetraoxohexadecyl, 8-Methoxy-1,5-dioxooctyl, 12-Methoxy-1,5,9-trioxooctyl, 16-Methoxy-1,5,9,13-tetraoxohexadecyl, 8-Ethoxy-1,5-dioxooctyl, 12-Ethoxy-1,5,9-trioxooctyl, 16-Ethoxy-1,5,9,13-tetraoxohexadecyl, 10-Hydroxy-1,6-dioxodecyl, 15-Hydroxy-1,6,11-trioxopentadecyl, 10-Methoxy-1,6-dioxodecyl, 15-Methoxy-1,6,11-trioxopentadecyl, 10-Ethoxy-1,6-dioxodecyl oder 15-Ethoxy-1,6,11-trioxopentadecyl,

gegebenenfalls durch ein oder mehrere Sauerstoff- und/oder Schwefelatome und/oder ein oder mehrere substituierte oder unsubstituierte Iminogruppen unterbrochenes $C_2$ - $C_{18}$-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-tri-oxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-dioxa-tetradecyl.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, *iso*-Propylimino, n-Butylimino oder *tert*-Butylimino sein.

Weiterhin bedeutet

gegebenenfalls durch Aryl, Alkyl, Aryloxy, Alkyloxy, Heteroatome und/oder Heterocyclen substituiertes $C_2$ - $C_{18}$-Alkenyl beispielsweise Vinyl, 1-Propenyl, Allyl, Methallyl, 1,1-Dimethylallyl, 2-Butenyl, 2-Hexenyl, Octenyl, Undecenyl, Dodecenyl, Octadecenyl, 2-Phenylvinyl, 2-Methoxyvinyl, 2-Ethoxyvinyl, 2-Methoxyallyl, 3-Methoxyallyl, 2-Ethoxyallyl, 3-Ethoxyallyl oder 1- oder 2-Chlorvinyl,

gegebenenfalls durch Aryl, Alkyl, Aryloxy, Alkyloxy, Heteroatome und/oder Heterocyclen substituiertes $C_6$ - $C_{12}$-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,

gegebenenfalls durch Aryl, Alkyl, Aryloxy, Alkyloxy, Heteroatome und/oder Heterocyclen substituiertes $C_5$ - $C_{12}$-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,

ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl

oder tert.-Butylthiophenyl und
$C_1$ bis $C_4$-Alkyl beispielsweise Methyl, Ethyl, Propyl, Isopropyl, n-Butyl, sec-Butyl oder tert.-Butyl.
Die Anzahl der Substituenten in den angegebenen Resten ist nicht beschränkt. In der Regel beträgt sie bei Resten mit ein bis drei Kohlenstoffatomen bis zu 3 Substituenten, bevorzugt bis zu 2 und besonders bevorzugt bis zu einem. Bei Resten mit vier bis sechs Kohlenstoffatomen beträgt sie in der Regel bis zu 4 Substituenten, bevorzugt bis zu 3 und besonders bevorzugt bis zu einem. Bei Resten mit mehr als sieben Kohlenstoffatomen beträgt sie in der Regel bis zu 6 Substituenten, bevorzugt bis zu 4 und besonders bevorzugt bis zu zwei.

$R^1$ ist bevorzugt durch Aryl, Alkyl, Aryloxy, Alkyloxy, Heteroatome und/oder Heterocyclen substituiertes $C_1$ - $C_{18}$-Alkyl oder $C_5$ - $C_{12}$-Cycloalkyl, beispielsweise Methyl, Ethyl, Propyl, Isopropyl, n-Butyl, sec-Butyl, tert.-Butyl, Pentyl, Hexyl, Heptyl, Octyl, 2-Etylhexyl, 2-Hydroxyethyl, 2-Hydroxypropyl, 3-Hydroxypropyl, 4-Hydroxybutyl, 6-Hydroxyhexyl, Cyclopentyl, Cyclohexyl, Cyclooctyl, Cyclododecyl, Methylcyclopentyl, Dimethylcyclopentyl, Methylcyclohexyl, Dimethylcyclohexyl, Norbornyl oder Norbornenyl, besonders bevorzugt ist $R^1$ Methyl, Ethyl, Propyl, Isopropyl, n-Butyl, sec-Butyl, tert.-Butyl, Pentyl, Hexyl, Heptyl, Octyl, 2-Etylhexyl, 2-Hydroxyethyl, 2-Hydroxypropyl, 3-Hydroxypropyl, 4-Hydroxybutyl oder 6-Hydroxyhexyl, ganz besonders bevorzugt Methyl, Ethyl, Propyl, Isopropyl, n-Butyl, sec-Butyl, tert.-Butyl oder 2-Etylhexyl und insbesondere Methyl, Ethyl, n-Butyl oder 2-Etylhexyl.

$R^2$ ist bevorzugt Wasserstoff, durch Aryl, Alkyl, Aryloxy, Alkyloxy, Heteroatome und/oder Heterocyclen substituiertes $C_1$ - $C_{18}$-Alkyl oder eine Carbonylgruppe, die mit $R^1$ verbunden ist, so daß die Gruppe $COOR^1$ und $R^2$ gemeinsam eine Säureanhydridgruppe -(CO)-O-(CO)- bilden, besonders bevorzugt Wasserstoff, Methyl, Ethyl, Propyl, Isopropyl, n-Butyl, sec-Butyl oder tert.-Butyl, ganz besonders bevorzugt Wasserstoff oder Methyl und insbesondere Wasserstoff.

$R^3$ ist bevorzugt Wasserstoff, durch Aryl, Alkyl, Aryloxy, Alkyloxy, Heteroatome und/oder Heterocyclen substituiertes $C_1$ - $C_{18}$-Alkyl, besonders bevorzugt Wasserstoff, oder $C_1$-$C_4$-Alkyl, worunter im Rahmen dieser Schrift Methyl, Ethyl, Propyl, Isopropyl, n-Butyl, sec-Butyl oder tert.-Butyl verstanden wird, ganz besonders bevorzugt Wasserstoff oder Methyl und insbesondere Wasserstoff.

$R^4$ ist bevorzugt Methyl, Ethyl, Propyl, Isopropyl, n-Butyl, sec-Butyl oder tert.-Butyl, besonders bevorzugt Methyl oder Ethyl.

$R^5$ und $R^6$ sind unabhängig voneinander bevorzugt Wasserstoff, durch Aryl, Alkyl, Aryloxy, Alkyloxy, Heteroatome und/oder Heterocyclen substituiertes $C_1$ - $C_{18}$-Alkyl, $C_2$ - $C_{18}$-Alkenyl, $C_6$ - $C_{12}$-Aryl oder $C_5$ - $C_{12}$-Cycloalkyl, besonders bevorzugt Wasserstoff, durch Aryl, Alkyl, Aryloxy, Alkyloxy, Heteroatome und/oder Heterocyclen substituiertes $C_1$ - $C_{18}$-Alkyl oder $C_6$ - $C_{12}$-Aryl, ganz besonders bevorzugt Wasserstoff, Methyl, Ethyl, Propyl, Isopropyl, n-Butyl, sec-Butyl, tert.-Butyl, Phenyl, Benzyl, Tolyl, o-, m- oder p-Xylyl, 2-, 3- oder 4-Methoxyphenyl, 2-, 3- oder 4-Chlorphenyl oder 2-, 3- oder 4-Nitrophenyl und insbesondere Wasserstoff, Methyl, Ethyl, Propyl, Isopropyl oder Phenyl.

Bevorzugt ist mindestens einer der beiden Reste $R^5$ und $R^6$ Wasserstoff.

$R^7$ ist bevorzugt ein organischer Rest, abgeleitet von einem n-wertigen Alkohol durch Entfernung von n Hydroxygruppen, beispielsweise abgeleitet von zwei- bis zehnwertigen Alkoholen, besonders bevorzugt abgeleitet von zwei- bis sechswertigen Alkoholen, ganz besonders bevorzugt abgeleitet von zwei- bis vierwertigen Alkoholen und insbesondere abgeleitet von zwei- bis dreiwertigen Alkoholen.

$R^8$ ist bevorzugt bedeutet unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_6$-$C_{12}$-Arylen, $C_3$-$C_{12}$-Cycloalkylen oder $C_1$-$C_{20}$-Alkylen oder durch ein- oder mehrere Sauerstoff- und/oder Schwefelatome und/oder ein oder mehrere substituierte oder unsubstituierte Iminogruppen und/oder durch eine oder mehrere -(CO)-, -O(CO)O-, -(NH)(CO)O-, -O(CO)(NH)-, -O(CO)- oder -(CO)O-Gruppen unterbrochenes $C_2$-$C_{20}$-Alkylen oder eine Einfachbindung, besonders bevorzugt unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_1$-$C_{20}$-Alkylen oder eine Einfachbindung und ganz besonders bevorzugt unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_1$-$C_{20}$-Alkylen.

Beispiele für Verbindungen (I) sind Acrylsäuremethylester, Acrylsäureethylester, Acrylsäure-n-propylester, Acrylsäure-iso-propylester, Acrylsäure-n-butylester, Acrylsäure-sek-butylester, Acrylsäure-tert-butylester, Acrylsäure-2-ethylhexylester, 2-Hydroxyethylacrylat, 5-Hydroxy-3-oxa-pentylacrylat, 2-Hydroxypropylacrylat, 3-Hydroxypropylacrylat, 4-Hydroxybutylacrylat, 6-Hydroxyhexylacrylat, Dihydrodicyclopentadienylacrylat, Norbornylacrylat, Cyclohexylacrylat, Cyclopentylacrylat, Cyclododecylacrylat, Phenylacrylat, Crotonsäuremethylester, Crotonsäureethylester, Maleinsäureanhydrid, Maleinsäuredimethylester, Maleinsäurediethylester, Maleinsäuredi-n-butylester, Fumarsäuredimethylester oder Fumarsäurediethylester.

Bevorzugte Verbindungen (I) sind Acrylsäuremethylester, Acrylsäureethylester, Acrylsäure-n-propylester Acrylsäure-iso-propylester, Acrylsäure-n-butylester, Acrylsäure-sek-butylester, Acrylsäure-tert-butylester und Acrylsäure-2-ethylhexylester.

Besonders bevorzugte Verbindungen (I) sind Acrylsäuremethylester, Acrylsäureethylester, Acrylsäure-n-butylester und Acrylsäure-2-ethylhexylester.

Beispiele für Verbindungen (II) sind Formaldehyd, Acetaldehyd, Propionaldehyd, n-Butyraldehyd, iso-Butyraldehyd, Heptanal, Nonanal, Cyclopentylaldehyd, Cyclohexylaldehyd, Benzaldehyd, 3-Chlorbenzaldehyd, 4-Chlorbenzaldehyd, 3-Hydroxybenzaldehyd, 4-Hydroxybenzaldehyd, 3-Methoxybenzaldehyd, 4-Methylbenzaldehyd, Phenylacetaldehyd, Salicylaldehyd, Chloralhydrat, 4-Dimethylaminobenzaldehyd, Furfural, 2-Nitrobenzaldehyd, Vanilin, Anisaldehyd, Zimtaldehyd, Pyridincarbaldehyd, Hydroxypivalinaldehyd, Dimethylolpropionaldehyd, Dimethylolbutyraldehyd, Trimethylolacetaldehyd, Aceton, Ethylmethylketon, Diethylketon, Methylvinylketon, iso-Butylmethylketon, Acetophenon, Propiophenon, Benzophenon, Cyclopentanon, Cyclohexanon oder Cyclododecanon.

Bevorzugte Verbindungen (II) sind die aufgelisteten Aldehyde, besonders bevorzugt sind Formaldehyd, Acetaldehyd, Propionaldehyd, n-Butyraldehyd, iso-Butyraldehyd, Benzaldehyd, 3-Hydroxybenzaldehyd, 4-Hydroxybenzaldehyd, Hydroxypivalinaldehyd, Dimethylolpropionaldehyd, Dimethylolbutyraldehyd und Trimethylolacetaldehyd, ganz besonders bevorzugt sind Formaldehyd, Acetaldehyd, Propionaldehyd, n-Butyraldehyd, iso-Butyraldehyd, 3-Hydroxybenzaldehyd, 4-Hydroxybenzaldehyd, Benzaldehyd und Dimethylolbutyraldehyd und insbesondere Formaldehyd und Acetaldehyd.

Es stellt eine bevorzugte Ausführungsform der vorliegenden Erfindung dar, als Verbindung (II) einen aromatischen Aldehyd einzusetzen, besonders bevorzugt Benzaldehyd, 3-Hydroxybenzaldehyd und 4-Hydroxybenzaldehyd und ganz besonders bevorzugt Benzaldehyd. Diese Ausführungsform ist insbesondere dann bevorzugt, wenn die erfindungsgemäßen Beschichtungsmassen für Klebstoffe eingesetzt werden sollen.

Es ist zur Herstellung nicht-etherverbrückter Baylis-Hillman-Produkte vorteilhaft Aldehyde in freier Form einzusetzen, d.h. die Bildung von Formalen dieser Aldehyde der Formel $(R^5\text{-CHO})_w$, worin w eine positive ganze Zahl ist, durch Einsatz geeigneter Aldehyde bzw. Wahl geeigneter Lösungsmittel zurückzudrängen. Während in US 5,380,901 aufgrund des Einsatzes von paraFormaldehyd bzw. para-Formaldehyd/DMSO, in dem die Bildung von Formalen nicht unterdrückt ist, durchweg etherverbrückte Systeme erhalten werden, ist es vorteilhaft Aldehyde mit einem hohen Anteil niedriger Formale einzusetzen, beispielsweise $w \leq 20$, bevorzugt $w \leq 10$ und besonders bevorzugt $w \leq 5$.

Der Anteil dieser niedrigen Formale sollte bezogen auf die Gesamtmenge Aldehyd beispielsweise mindestens 50 % betragen, bevorzugt mindestens 60 %, besonders bevorzugt mindestens 70 % und ganz besonders bevorzugt mindestens 80 %.

Dies wird im Fall von Formaldehyd beispielsweise dadurch erreicht, daß man Formaldehyd in Form von wäßrigen Lösungen einsetzt, beispielsweise nicht mehr als 49 %ig und bevorzugt bis zu 37 %ig.

Durch diese Maßnahmen ist es möglich, den Anteil etherverbrückter Baylis-Hillman Produkte zurückzudrängen. Dieser Anteil wird bestimmt als molarer Anteil der Aldehyd-Äquivalente in Etherverbrückungen ($-CHR^5\text{-O-}CHR^5$ an der Summe der Baylis-Hillman Produkte, also Etherverbrückungen und endständige $-CHR^5OH$-Gruppen.

Die Etherverbrückungen entsprechen somit 2 Moläquivalenten Aldehyd $R^5$-CHO, wohingegen die endständigen $-CHR^5OH$-Gruppen einem Moläquivalent Aldehyd entsprechen.

Die Bestimmung der Anteile der Gruppen kann beispielsweise über NMR-Spektroskopie erfolgen. Im Fall von Formaldehyd erscheint in $^1$H-NMR-Spektren in CDCl3 die $CH_2\text{-O-}CH_2$-Gruppe als Singulett bzw. durch Allylkopplung aufgespaltenes Singulett bei ca. $\delta$=4,22 ppm (s. US 5,380,901) und die $CH_2OH$-Gruppe bei ca. 4,30 ppm oder in $^{13}$C-NMR-Spektren in $CDCl_3$ die $CH_2\text{-O-}CH_2$-Gruppe bei ca. $\delta$=68,7 ppm und die $CH_2OH$-Gruppe bei ca. 62,0 ppm.

Durch die oben beschriebenen erfindungsgemäßen Maßnahmen des Einsetzens von Aldehyden mit einem geringen Anteil an Formalen kann der Anteil der Etherverbrückungen in der Regel auf 50% oder weniger, bevorzugt auf 40% oder weniger, besonders bevorzugt auf nicht mehr als 33%, ganz besonders bevorzugt auf nicht mehr als 25% und insbesondere auf nicht mehr als 15% gesenkt werden.

Dahingegen beträgt der Anteil an Etherverbrückungen in dem in US 5,380,901 Spalte 5 dargestellten Silikondiacrylat mit n=2 und 95% x=$-CH_2OH$ (US 5,380,901, Spalte 5, Zeile 57-59) etwa 69%. Ein hoher Anteil endständiger OH-Gruppen ist jedoch in der Dual-Cure-Härtung für die Reaktion mit gegenüber OH reaktiven Gruppen vorteilhaft.

Beispiele für Verbindungen (IV) sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000 g/mol, Poly-1,3-Propandiol mit einer Molmasse zwischen 134 und 1178 g/mol, Polyethylenglykol mit einer Molmasse zwischen 106 und 898 g/mol, sowie Urethanacrylate oder Polycarbonatacrylate.

Weitere Beispiele sind Acrylate von Verbindungen der Formel (IVa) bis (IVc),

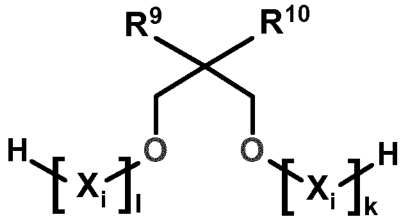

**(IVa)**

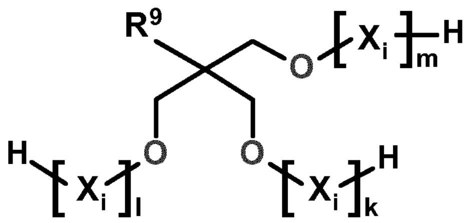

**(IVb)**

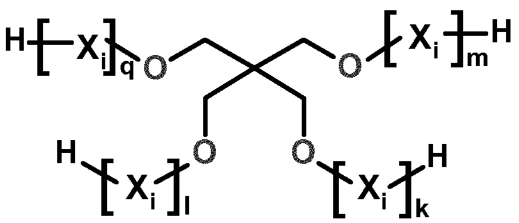

**(IVc)**

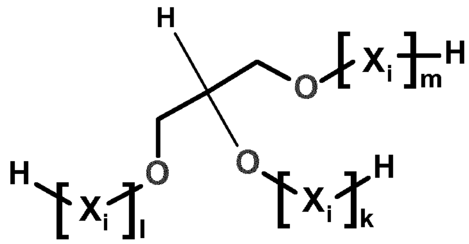

**(IVd)**

worin

$R^9$ und $R^{10}$ unabhängig voneinander Wasserstoff oder $C_1$ - $C_{18}$-Alkyl,

k, l, m, q unabhängig voneinander je für eine ganze Zahl von 1 bis 10, bevorzugt 1 bis 5 und besonders bevorzugt 1 bis 3 steht und

jedes $X_i$ für i = 1 bis k, 1 bis l, 1 bis m und 1 bis q unabhängig voneinander ausgewählt sein kann aus der Gruppe $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2$-CHVin-O-, -CH-Vin-$CH_2$-O-, $-CH_2$-CHPh-O- und -CHPh-$CH_2$-O-, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$,

worin Ph für Phenyl und Vin für Vinyl steht.

Bevorzugt handelt es sich dabei um Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Glycerin, Trimethylolpropan, Trimethylolethan, Trimethylolmethan oder Pentaerythrit.

Bevorzugte Verbindungen (IV) sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyesterpolyolacrylate, Polyetherolacrylate und Triacrylat von ein- bis zwanzigfach ethoxyliertem Trimethylolpropan sowie Tetraacrylat von ein- bis zwanzigfach ethoxyliertem Pentaerythrit.

Besonders bevorzugte Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan sowie Tetraacrylat von ein- bis zwanzigfach ethoxyliertem Pentaerythrit.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise $C_1$-$C_4$-Alkylester, bevorzugt Methyl-, Ethyl- oder n-Butylester, der genannten Säuren eingesetzt werden. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt.

Bevorzugt sind Alkohole der allgemeinen Formel $HO-(CH_2)_x-OH$, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel $HO-(CH_2)_z-COOH$ ableiten, wobei z eine Zahl von 1 bis 20 ist und ein H-Atom einer Methyleneinheit auch durch einen $C_1$- bis $C_4$-Alkylrest substituiert sein kann. Beispiele sind $\varepsilon$-Caprolacton, $\beta$-Propiolacton, gamma-Butyrolacton und/oder Methyl-$\varepsilon$-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des $\varepsilon$-caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bei der Verbindung (VI) handelt es sich um mindestens eine, bevorzugt genau eine mehrfunktionelle, bevorzugt difunktionelle Carbonylverbindung, speziell ein Diketon oder Dialdehyd, ganz speziell einen Dialdehyd.

Unter den Dialdehyden sind solche besonders bevorzugt, die am Kohlenstoffatom in $\alpha$-Position zur Aldehydfunktion kein mit der verwendeten Base abstrahierbares Wasserstoffatom aufweisen.

Beispiele für Verbindungen (VI) sind Glyoxal, Malonaldehyd, Succinaldehyd, Glutaraldehyd, Capronaldehyd, Furan-2,5-dialdehyd, Pyrrol-2,5-dialdehyd, Pyridin-2,6-dialdehyd, Phthalaldehyd, Isophthalaldehyd und Terephthalaldehyd, besonders bevorzugt sind Glyoxal, Succinaldehyd, Glutaraldehyd, Isophthalaldehyd und Terephthalaldehyd.

Denkbar sind auch Kondensate von Formaldehyd beispielsweise als carbonyl-funktionalisierte Novolake und Lignin.

Es stellt eine bevorzugte Ausführungsform der vorliegenden Erfindung dar, als Verbindung (VI) einen aromatischen Aldehyd einzusetzen, besonders bevorzugt Phthalaldehyd, Isophthalaldehyd oder Terephthalaldehyd und ganz besonders bevorzugt Terephthalaldehyd. Diese Ausführungsform ist insbesondere dann bevorzugt, wenn die erfindungsgemäßen Beschichtungsmassen für Klebstoffe eingesetzt werden sollen.

Weiterhin bevorzugt sind Verbindungen der Formel (V) in denen n mindestens 3 und bevorzugt 3 oder 4 ist. Ganz besonders bevorzugt sind solche Verbindungen, in denen der Rest $R^7$ abgeleitet ist von gegebenenfalls alkoxyliertem Trimethylolpropan oder Pentaerythrit. Diese Verbindungen weisen durch das gleichzeitige Vorliegen von Acrylat und Hydroxy-Gruppen eine besonders gute Eignung für die Dual-Cure-Härtung auf.

Zur Herstellung der Komponente (Sz) ist es erforderlich, daß man mindestens eine difunktionelle Carbonylverbindung (A2) und/oder mindestens eine mehr als difunktionelle Carbonylverbindung (Ax) mit mindestens einer difunktionellen Acrylatverbindung (B2) und/oder mindestens einer mehr als difunktionellen Acrylatverbindung (By) umsetzt.

Folgende Umsetzungsmöglichkeiten führen zu den erfindungsgemäßen Komponente (Sz):

- 1) mindestens eine Verbindung (A2) und mindestens eine Verbindung (B2),
- 2) mindestens eine Verbindung (Ax) und mindestens eine Verbindung (By),
- 3) mindestens eine Verbindung (Ax) und mindestens eine Verbindung (B2),
- 4) mindestens eine Verbindung (A2) und mindestens eine Verbindung (By),
- 5) mindestens eine Verbindung (Ax) und mindestens eine Verbindung (By) und mindestens eine Verbindung (A2),
- 6) mindestens eine Verbindung (Ax) und mindestens eine Verbindung (By) und mindestens eine Verbindung (B2),
- 7) mindestens eine Verbindung (Ax) und mindestens eine Verbindung (B2) und mindestens eine Verbindung (A2),
- 8) mindestens eine Verbindung (By) und mindestens eine Verbindung (A2) und mindestens eine Verbindung (B2),
- 9) mindestens eine Verbindung (Ax) und mindestens eine Verbindung (By) und mindestens eine Verbindung (A2) und mindestens eine Verbindung (B2).

Unter diesen sind die Reaktionsmöglichkeiten 4), 8) und 1) bevorzugt, besonders bevorzugt ist die Reaktionsmöglichkeit 8), bei der mindestens eine Verbindung (By) und mindestens eine Verbindung (A2) und mindestens eine Verbindung (B2) miteinander umgesetzt werden.

Es stellt eine bevorzugte Ausführungsform der vorliegenden Erfindung dar, Verbindungen (Sz) nach Reaktionsmöglichkeit 1) herzustellen, bei der mindestens eine Verbindung (A2) und mindestens eine Verbindung (B2) miteinander umgesetzt werden.

Die mindestens eine Carbonylverbindung (Ax) mit mehr als zwei Carbonylgruppen weist im statistischen Mittel mehr als zwei Carbonylgruppen auf, bevorzugt mindestens 3, besonders bevorzugt 3 bis 6, ganz besonders bevorzugt 3 bis 5, insbesondere 3 bis 4 und speziell 3.

Dabei kann es sich um mindestens eine, beispielsweise ein bis vier, bevorzugt ein bis drei, besonders bevorzugt ein bis zwei und ganz besonders bevorzugt genau eine Verbindung (Ax) handeln.

Darin sind die Carbonylgruppen ausgewählt aus der Gruppe bestehend aus

- Aldehydgruppen und
- Ketogruppen,

bevorzugt handelt es sich entweder um mehr als difunktionelle Ketone oder um mehr als difunktionelle Aldehyde, besonders bevorzugt um ausschließlich Aldehydgruppen aufweisende Verbindungen.

Diese funktionellen Gruppen können dabei in beliebiger Weise miteinander verbunden sein, beispielsweise durch aromatische, aliphatische, cycloaliphatische oder heteroaromatische Gruppen oder Kombinationen davon, bevorzugt durch aromatische oder aliphatische Gruppen.

Bevorzugte Verbindungen (Ax) sind beispielsweise mit drei Aldehydgruppen substituierte Aromaten, wie 1,2,3-, 1,2,4- oder 1,3,5-Benzoltrialdehyd, 2,4,6-Pyridintrialdehyd, oder Hydroformylierungsprodukte von Alkanpolyenen mit einer entsprechenden Anzahl von C=C-Doppelbindungen, bevorzugt Alkantrienen. Die mittlere Anzahl der Aldehydgruppen im Gemisch ist durch die Anzahl der C=C-Doppelbindungen und Hydroformylierung steuerbar. Derartige Produkte sind beispielsweise beschrieben in WO 98/28252, dort besonders von Seite 3, Zeile 36 bis Seite 11, Zeile 44 sowie den darin beschriebenen Beispielen 1 bis 9.

Eine besonders bevorzugte Verbindung (Ax) ist 1,3,5-Benzoltrialdehyd.

Als Einsatzstoffe für die Reaktion werden optional mindestens eine, beispielsweise ein bis vier, bevorzugt ein bis drei, besonders bevorzugt ein bis zwei und ganz besonders bevorzugt genau eine difunktionelle Carbonylverbindung (A2) mit der obigen Maßgabe eingesetzt.

Die reaktiven Gruppen der Dicarbonylverbindung (A2) mit genau zwei Carbonylgruppen ist ausgewählt aus der Gruppe bestehend aus

- Aldehydgruppen (A2a) und
- Ketogruppen (A2b).

Unter den Verbindungen (A2) sind Diketone und Dialdehyde bevorzugt, besonders bevorzugt handelt es sich bei der Verbindung (A2) um einen Dialdehyd.

Bevorzugt sind in der Verbindung (A2) die zwei Carbonylgruppen durch einen aliphatischen, cycloaliphatischen oder aromatischen Kohlenwasserstoffrest miteinander verbunden.

Bevorzugt handelt es sich bei den Dialdehyden als Verbindungen (A2) um Verbindungen der Formel (VI)

OHC-$R^8$-CHO,

wie oben aufgeführt.

Bevorzugte Verbindungen (A2) sind Glyoxal, Malondialdehyd, Succinaldehyd, Glutaraldehyd, Capronaldehyd, Furan-2,5-dialdehyd, Pyrrol-2,5-dialdehyd, Pyridin-2,6-dialdehyd, Phthalaldehyd, Isophthalaldehyd und Terephthalaldehyd, besonders bevorzugt sind Glyoxal, Succinaldehyd, Glutaraldehyd, Isophthalaldehyd und Terephthalaldehyd.

Es stellt eine bevorzugte Ausführungsform der vorliegenden Erfindung dar, als Verbindung (A2) einen aromatischen Aldehyd einzusetzen, besonders bevorzugt Phthalaldehyd, Isophthalaldehyd oder Terephthalaldehyd und ganz besonders bevorzugt Terephthalaldehyd. Diese Ausführungsform ist insbesondere dann bevorzugt, wenn die erfindungsgemäßen Beschichtungsmassen für Klebstoffe eingesetzt werden sollen.

Die mindestens eine Acrylatverbindung (By) mit mehr als zwei Acrylatgruppen weist im statistischen Mittel mehr als zwei Acrylatgruppen auf, bevorzugt mindestens 3, besonders bevorzugt 3 bis 8, ganz besonders bevorzugt 3 bis 6, insbesondere 3 bis 4 und speziell 3.

Dabei kann es sich um mindestens eine, beispielsweise ein bis vier, bevorzugt ein bis drei, besonders bevorzugt ein bis zwei und ganz besonders bevorzugt genau eine Verbindung (By) handeln.

Die Acrylatverbindungen (By) entsprechen den oben beschriebenen Verbindungen der Formel (IV) mit Werten für n von mindestens 3. Dabei kann es sich beispielsweise um Acrylsäureester von Polyalkoholen, wie Polyolen, Polyetherolen, Polyesterolen oder Polyacrylatpolyolen, mit der entsprechenden Funktionalität handeln. Somit können geeignete Verbindungen (By) Polyetheracrylate, Polyesteracrylate, acrylierte Polyacrylatole oder Urethanacrylate mit der gewünschten Funktionalität größer 2 sein.

Bevorzugt handelt es sich dabei um Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Glycerin, Trimethylolpropan, Trimethylolethan oder Pentaerythrit.

Bevorzugte Verbindungen (B2) sind Ethylenglykoldiacrylat, 1,2-Propandioldiacrylat, 1,3-Propandioldiacrylat, 1,4-Butandioldiacrylat und 1,6-Hexandioldiacrylat, bevorzugte Verbindungen (By) sind Trimethylolpropantriacrylat, Glycerintriacrylat, Pentaerythrittetraacrylat, und Triacrylat von ein- bis zwanzigfach ethoxyliertem Trimethylolpropan sowie Tetraacrylat von ein- bis zwanzigfach ethoxyliertem Pentaerythrit.

Besonders bevorzugte Verbindungen (B2) sind 1,4-Butandioldiacrylat, 1,6-Hexandioldiacrylat, und besonders bevorzugte Verbindungen (By) sind Glycerintriacrylat, Trimethylolpropantriacrylat, Pentaerythrittetraacrylat und Triacrylat von ein- bis zwanzigfach ethoxyliertem Trimethylolpropan sowie Tetraacrylat von ein- bis zwanzigfach ethoxyliertem Pentaerythrit.

Als weiterer Einsatzstoff können optional mindestens ein, beispielsweise ein bis vier, bevorzugt ein bis drei, besonders bevorzugt ein bis zwei und ganz besonders bevorzugt genau ein difunktionelles Acrylat (B2) eingesetzt werden.

Bei diesen handelt es sich beispielsweise um die oben beschriebenen Verbindungen der Formel (IV) mit n=2.

Bei der Diacrylatverbindung (B2) handelt es sich um beliebige difunktionelle Acrylate, bevorzugt um Diacrylate von Alkandiolen oder Cycloalkandiolen sowie niederen Polyalkylenglykolen, bevorzugt Polyethylenglykolen oder Polypropylenglykolen, oder - wenn auch weniger bevorzugt - difunktionelle Acrylamide von Diaminen, vorzugsweise von linearen oder verzweigten aliphatischen oder cycloaliphatischen Diaminen.

Bevorzugt handelt es sich bei den Verbindungen (B2) um solche mit einem Molekulargewicht unter 400 g/mol, besonders bevorzugt um strukturell einheitliche Verbindungen, d.h. solche, die keine signifikante Molekulargewichtsverteilung aufweisen.

Bei den Alkandiolen kann es sich bevorzugt handeln um Ethylenglykol, 2,2-Dimethyl-1,2-Ethandiol, 1,3-Propandiol, 1,2-Propandiol, 1,2-Butandiol, 1,3-Butandiol, 1,4-Butandiol, 3-Methyl-pentan-1,5-diol, 2-Ethylhexan-1,3-diol, 2,4-Diethyloctan-1,3-diol, 1,6-Hexandiol, Neopentylglykol, 2-Ethyl-1,3-Propandiol oder 2-Methyl-1,3-Propandiol.

Bei den Cycloalkandiolen kann es sich bevorzugt handeln um 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Bei den Polyalkylenglykolen kann es sich bevorzugt handeln um Polyethylenglykole, Polypropylenglykole, Poly-THF oder Poly-1,3-propandiol. Besonders bevorzugt sind Polyethylenglykole oder Polypropylenglykole als Gemisch der Isomere.

Unter den Polyalkylenglykolen sind Di- bis Pentamere bevorzugt.

Bei den Diaminen handelt es sich bevorzugt um lineare oder verzweigte aliphatische oder cycloaliphatische primäre und/oder sekundäre Diamine, wie zum Beispiel 1,2-Diaminoethan, 1,2-oder 1,3-Diaminopropan, 1,4-Diaminobutan, 1,5-Diaminopentan, 1,6-Diaminohexan, 1,7-Diaminoheptan, 1,8-Diaminooktan, 1,9-Diaminononan, 1,10-Diaminodekan, 1,12-Diaminododecan oder Piperazin.

Besonders bevorzugte Diacrylate (B2) sind Ethylenglykoldiacrylat, 1,2-Propandioldiacrylat, 1,3-Propandioldiacrylat, 1,3-Butandioldiacrylat, 1,4-Butandioldiacrylat, 1,6-Hexandioldiacrylat, Diethylenglykoldiacrylat, Dipropylenglykoldiacrylat, Tripropylenglykoldiacrylat, N,N'-Bisacryloyl-1,2-diaminoethan, N,N'-Bisacryloyl-1,6-diaminohexan oder N,N'-Bisacryloyl-piperazin.

Ganz besonders bevorzugte Verbindungen sind 1,4-Butandioldiacrylat, 1,6-Hexandioldiacrylat, Dipropylenglykoldiacrylat und Tripropylenglykoldiacrylat.

Die Durchführung der Baylis-Hillman-Reaktion ist dem Fachmann an sich bekannt und Gegenstand mehrerer Literaturüberblicke.

Die Reaktion kann bei einer Temperatur zwischen 0 °C und 100 °C, bevorzugt 20 bis 80 °C und besonders bevorzugt 25 °C bis 60 °C durchgeführt werden.

Um Ketone zur Reaktion zu bringen kann es erforderlich sein, hohen Druck anzulegen.

Als Katalysator (E1) für die Herstellung der Baylis-Hillman Addukte wird zumeist ein tertiäres Amin oder Phosphin verwendet, beispielsweise Trimethylamin, Triethylamin, Tri-n-butylamin, Ethyl-di-*iso*-Propylamin, Methyl-di-*iso*-Propylamin, N-Methylmorpholin, N-Methylpiperidin, Triethanolamin, N,N-Dimethylethanolamin, 4-Dimethylaminopyridin, 1,5-Diazabicyclo[4.3.0]-non-5-en (DBN), 1,8-Diazabicyclo[5.4.0]-undec-7-en (DBU), Pyrrocolin, Chinuclidin, 3-Hydroxychinuclidin, Chinidin, Trimethylphosphin, Triethylphosphin, Tri-n-Butylphosphin, Dimethylphenylphosphin und bevorzugt 1,4-Diaza-bicyclo[2,2,2]octan (DABCO), 1,5-Diazabicyclo[4.3.0]-non-5-en (DBN), 1,8-Diazabicyclo[5.4.0]-undec-7-en (DBU), Chinuclidin und 3-Hydroxychinuclidin, besonders bevorzugt sind 1,4-Diaza-bicyclo[2,2,2]octan (DABCO) und 3-Hydroxychinuclidin.

Der Katalysator wird in der Regel in Mengen von 1 bis 100 mol% bzgl. Acrylgruppen eingesetzt, bevorzugt 2 - 50, besonders bevorzugt 3 - 40 und ganz besonders bevorzugt 5 - 30 mol%.

Die Katalyse der Addition kann homogen oder mit einem an einen Träger gebundenen Katalysator heterogen erfolgen. In einer bevorzugten Ausführungsform wird der Katalysator (E) nach der Addition wieder aus dem Reaktionsgemisch entfernt, beispielsweise durch Ionentauscher, Neutralisation oder Extraktion.

Weiterhin ist es möglich, zusätzlich zu den genannten Amin- oder Phosphin-Katalysatoren mindestens einen Co-Katalysator in Mengen bis zu 5 Gew%, bevorzugt von 0,1 bis 3, besonders bevorzugt 0,2 bis 2 Gew% einzusetzen, bei dem es sich um Alkohole oder Phenole handeln kann. Bei den Phenolen handelt es sich neben Phenol bevorzugt um solche Phenole, die mindestens eine Alkylkette am aromatischen Ring tragen.

Bevorzugte Phenole sind Alkylphenole, beispielsweise o-, m- oder p-Kresol (Methylphenol), 2-tert.-Butyl-4-methylphenol, 6-tert.-Butyl-2,4-dimethyl-phenol, 2,6-Di-tert.-Butyl-4-methylphenol, 2-tert.-Butylphenol, 4-tert.-Butylphenol, 2,4-di-tert.-Butylphenol, 2-Methyl-4-tert.-Butylphenol, 4-tert.-Butyl-2,6-dimethylphenol, oder 2,2'-Methylen-bis-(6-tert.-butyl-4-methylphenol), 4,4'-Oxydiphenyl, 3,4-Methylendioxydiphenol (Sesamol), 3,4-Dimethylphenol, Hydrochinon, Brenzcatechin (1,2-Dihydroxybenzol), 2-(1'-Methylcyclohex-1'-yl)-4,6-dimethylphenol, 2- oder 4-(1'-Phenyl-eth-1'-yl)-phenol, 2-tert-Butyl-6-methylphenol, 2,4,6-Tris-tert-Butylphenol, 2,6-Di-tert.-butylphenol, 2,4-Di-tert.-butylphenol, 4-tert.-Butylphenol, Dodecylphenol, Undecylphenol, Decylphenol, Nonylphenol [11066-49-2], Octylphenol [140-66-9], 2,6-Dimethylphenol, Bisphenol A, Bisphenol F, Bisphenol B, Bisphenol C, Bisphenol S, 3,3',5,5'-Tetrabromobisphenol A, 2,6-Di-tert-Butyl-p-kresol, Koresin® der BASF SE, 3,5-Di-tert-Butyl-4-hydroxybenzoesäuremethylester, 4-tert-Butylbrenzcatechin, 2-Hydroxybenzylalkohol, 2-Methoxy-4-methylphenol, 2,3,6-Trimethylphenol, 2,4,5-Trimethylphenol, 2,4,6-Trimethylphenol, 2-Isopropylphenol, 4-Isopropylphenol, 6-Isopropyl-m-Kresol, n-Octadecyl-β-(3,5-di-tert-butyl-4-hydroxyphenyl)propionat, 1,1,3-Tris-(2-methyl-4-hydroxy-5-tert-butylphenyl)butan, 1,3,5-Trimethyl-2,4,6-tris-(3,5-di-tert-butyl-4-hydroxybenzyl)benzol, 1,3,5,-Tris-(3,5-di-tert-butyl-4-hydroxybenzyl)isocyanurat, 1,3,5,-Tris-(3,5-di-tert-butyl-4-hydroxyphenyl)-propionyloxyethyl-isocyanurat, 1,3,5-Tris-(2,6-dimethyl-3-hydroxy-4-tert-butylbenzyl)-isocyanurat oder Pentaerythrit-tetrakis-[β-(3,5,-di-tert-butyl-4-hydroxyphenyl)-propionat], 2,6-Di-*tert*.-butyl-4-dimethylaminomethylphenol, 6-*iso*.-Butyl-2,4-dinitrophenol, 6-*sek*.-Butyl-2,4-dinitrophenol, Irganox® 565, 1141, 1192, 1222 und 1425 der Firma BASF, 3-(3',5'-Di-*tert*.-butyl-4'-hydroxyphenyl)propionsäureoctadecylester, 3-(3',5'-Di-*tert*.-butyl-4'-hydroxyphenyl)-propionsäurehexadecylester, 3-(3',5'-Di-*tert*.-butyl-4'-hydroxyphenyl)propionsäureoctylester, 3-Thia-1,5-pentandiol-bis-[(3',5'-di-*tert*.-butyl-4'-hydroxyphenyl)propionat], 4,8-Dioxa-1,11-undecandiol-bis-[(3',5'-di-*tert*.-butyl-4'-hydroxyphenyl)propionat], 4,8-Dioxa-1,11-undecandiol-bis-[(3'-*tert*.-butyl-4'-hydroxy-5'-methylphenyl)propionat], 1,9-Nonandiol-bis-[(3',5'-di-*tert*.-butyl-4'-hydroxyphenyl)propionat], 1,7-Heptandiamin-bis[3-(3',5'-di-*tert*.-butyl-4'-hydroxyphenyl)propionsäureamid], 1,1-Methandiamin-bis[3-(3',5'-di-*tert*.-butyl-4'-hydroxyphenyl)propionsäureamid], 3-(3',5'-di-*tert*.-Butyl-4'-hydroxyphenyl)propionsäurehydrazid, 3-(3',5'-di-Methyl-4'-hydroxyphenyl)propionsäurehydrazid, Bis(3-*tert*.-Butyl-5-ethyl-2-hydroxy-phen-1-yl)methan, Bis(3,5-di-*tert*.-Butyl-4-hydroxy-phen-1-yl)methan, Bis[3-(1'-methylcyclohex-1'-yl)-5-methyl-2-hydroxyphen-1-yl]methan, Bis(3-*tert*.-Butyl-2-hydroxy-5-methyl-phen-1-yl)methan, 1,1-Bis(5-*tert*.-Butyl-4-hydroxy-2-methyl-phen-1-yl)ethan, Bis(5-*tert*.-Butyl-4-hydroxy-2-methyl-phen-1-yl)sulfid, Bis(3-*tert*.-Butyl-2-hydroxy-5-methyl-phen-1-yl)sulfid, 1,1-Bis(3,4-Dimethyl-2-hydroxy-phen-1-yl)-2-methylpropan, 1,1-Bis(5-*tert*.-Butyl-3-methyl-2-hydroxy-phen-1-yl)-butan, 1,3,5-Tris[1'-(3",5"-di-*tert*.-Butyl-4"-hydroxy-phen-1"-yl)-meth-1'-yl]-2,4,6-trimethylbenzol, 1,1,4-Tris(5'-*tert*.-Butyl-4'-hydroxy-2'-methyl-phen-1'-yl)butan, Alkoxyphenole, beispielsweise 2-Methoxyphenol (Guajacol, Brenzcatechinmonomethylether), 2-Ethoxyphenol, 2-Isopropoxyphenol, 4-Methoxyphenol (Hydrochinonmonomethylether), Mono- oder Di-tert.-Butyl-4-methoxyphenol, 3,5-Di-tert-butyl-4-hydroxyanisol, 3-Hydroxy-4-methoxybenzylalkohol, 2,5-Dimethoxy-4-hydroxybenzylalkohol (Syringaalkohol), 4-Hydroxy-3-methoxybenzaldehyd (Vanillin), 4-Hydroxy-3-ethoxybenzaldehyd (Ethylvanillin), 3-Hydroxy-4-methoxybenzaldehyd (Isovanillin), 1-(4-Hydroxy-3-methoxy-phenyl)-ethanon (Acetovanillon), Eugenol, Dihydroeugenol, Isoeugenol, oder Tocopherole, wie z.B. α-, β-, γ-, δ- und ε-tocopherol, Tocol oder α--Tocopherolhydrochinon.

Die Stöchiometrie zwischen Acrylatgruppen und Carbonylverbindungen beträgt in der Regel 1 : 0,05 - 1,5, bevorzugt 1 : 0,1 - 1,3, besonders bevorzugt 1 : 0,2 - 1,0 und ganz besonders bevorzugt 1 : 0,4 - 1,0.

Das molare Verhältnis von mehr als difunktionellen Verbindungen (Ax) und (By) in Summe zur Summe der difunktionellen Verbindungen (A2) und (B2) beträgt in der Regel von 1 : 0 - 5, bevorzugt von 1 : 0,1 bis 4, besonders bevorzugt von 1 : 0,25 bis 3, ganz besonders bevorzugt von 1 : 0,5 bis 2 und insbesondere 1 : 0,8 - 1,5.

Die Reaktion kann in einem Lösungsmittel durchgeführt werden, als Lösungsmittel können bevorzugt Wasser, Petrolether, Ligroin, Toluol, Benzol, Xylol, Tetrahydrofuran (THF), Diethylether, Dioxan, oder aber auch das verwendete Acrylat eingesetzt werden. Die Reaktion kann auch in Abwesenheit eines Lösungsmittels durchgeführt werden.

Wird das Acrylat als Lösungsmittel verwendet, so kann das entstehende Reaktionsgemisch, das sowohl das verwendete Acrylat als auch α-(1'-Hydroxyalkyl)acrylat enthält, aufgereinigt oder ohne Abtrennung des Acrylats als solches eingesetzt werden, wobei das Acrylat dann als Reaktivverdünner (D) fungiert.

Auf eine Aufreinigung des Reaktionsgemisches kann verzichtet werden, selbstverständlich kann das Gemisch natürlich auch durch Destillation, Strippen, saure, alkalische oder neutrale Wäsche, Filtration oder dergleichen gereinigt werden.

In einer bevorzugten Ausführungsform wird die Carbonylverbindung im Verhältnis zu den Acrylatgruppen unterstöchiometrisch eingesetzt, so daß Reaktionsgemische erhalten werden, die das Baylis-Hillman-Produkt im Gemisch mit dem eingesetzten Acrylat enthalten. Derartige Gemische können mit Vorteil in Beschichtungsmassen für die Strahlungshärtung und/oder Dual-Cure-Härtung eingesetzt werden.

Die Polymere (Sz) nach den oben aufgeführten Reaktionsmöglichkeiten 2) bis 9) zeichnen sich gegenüber den nach Reaktionsmöglichkeit 1) erhältlichen Polymeren dadurch aus, daß sie verzweigt sind, wohingegen die nach Reaktionsmöglichkeit 1) erhältlichen Polymere lineare Polymere ergeben. Bevorzugt sind lineare Polymere, erhältlich nach Reaktionsmöglichkeit 1).

Der Verzweigungsgrad (Degree of Branching, DB) eines verzweigten Polymers berechnet sich wie offenbart in H. Frey et al., Acta Polym. 1997, 48, 30-35, siehe dort Formel (1).

Gemäß Formel (1) von Frey et al. ist der Verzweigungsgrad definiert als

$$DB\,[\%] = (D + T) / (D + L + T), \text{ multipliziert mit } 100$$

worin

D, T und L jeweils die Anteile von verzweigenden, terminalen oder linear eingebauten Monomereinheiten im Polymer sind.

Die verzweigten Polymere unter den Verbindungen (Sz) weisen in der Regel einen Verzweigungsgrad von mindestens 5% auf, bevorzugt von mindestens 10%, besonders bevorzugt von mindestens 15%, ganz besonders bevorzugt mindestens 20% und insbesondere mindestens 25%.

Der Verzweigungsgrad läßt sich beispielsweise per NMR-Analytik auf Basis von Modellsubstanzen bestimmen.

Ein Polymer mit einem ideal verzweigten Aufbau ohne lineare Anteile weist einen Verzweigungsgrad von 100% auf, bevorzugt sind die erfindungsgemäßen Polymere erhältlich als verzweigte oder hochverzweigte Polymere mit einem Verzweigungsgrad bis zu 99,9%, besonders bevorzugt bis zu 99%, ganz besonders bevorzugt bis zu 98% und insbesondere bis zu 95%.

Die Polymere (Sz) sind in der Regel farblos bis bernsteinfarben gefärbt und lösen sich gut in Lösemitteln wie Methanol, Ethanol, Dimethylformamid, Dimethylacetamid, Essigester, Butylacetat, Tetrahydrofuran, Aceton, 2-Butanon oder Toluol.

In einer bevorzugten Ausführungsform werden die Carbonylverbindungen im Verhältnis zu den Acrylatgruppen aufweisenden Verbindungen unterstöchiometrisch eingesetzt, so daß Reaktionsgemische erhalten werden, die das Baylis-Hillman-Produkt im Gemisch mit dem eingesetzten Acrylat enthalten. Derartige Gemische können mit Vorteil in Beschichtungsmassen für die Strahlungshärtung und/oder Dual-Cure-Härtung eingesetzt werden.

Thiolgruppentragende Verbindungen ( C )

Die Verbindung (C) weist erfindungsgemäß mindestens zwei Mercaptogruppen auf, bevorzugt zwei bis 20, besonders bevorzugt zwei bis 15, besonders bevorzugt zwei bis zwölf, insbesondere drei bis zehn und speziell vier bis

sechs.

Als Mercaptogruppen bzw. Thiolgruppen werden erfindungsgemäß -SH Gruppen verstanden, besonders solche, die an tertiäre Kohlenstoffatome, Methingruppen oder Methylengruppen gebunden sind, besonders bevorzugt solche, die an Methylengruppen gebunden sind.

Bevorzugte Verbindungen (C) besitzen ein zahlenmittleres Molekulargewicht $M_n$ von mindestens 400 g/mol, in der Regel sollte ein Molekulargewicht $M_n$ von 5000 g/mol nicht überschritten werden, bevorzugt nicht mehr als 4500, besonders bevorzugt nicht mehr als 4000, ganz besonders bevorzugt nicht mehr als 3500 und insbesondere nicht mehr als 3000 g/mol.

Durch das angegebene Molekulargewicht ist es möglich, die Flüchtigkeit und den typischen Geruch der Mercaptoverbindungen so gering wie möglich zu halten.

Derartige Verbindungen (C) sind bevorzugt erhältlich durch Reaktion mindestens eines Esters von thiolgruppentragenden Carbonsäuren mit Polyalkoholen.

Bevorzugt handelt es sich bei den Verbindungen (C) um Verbindungen (C1) der Formel

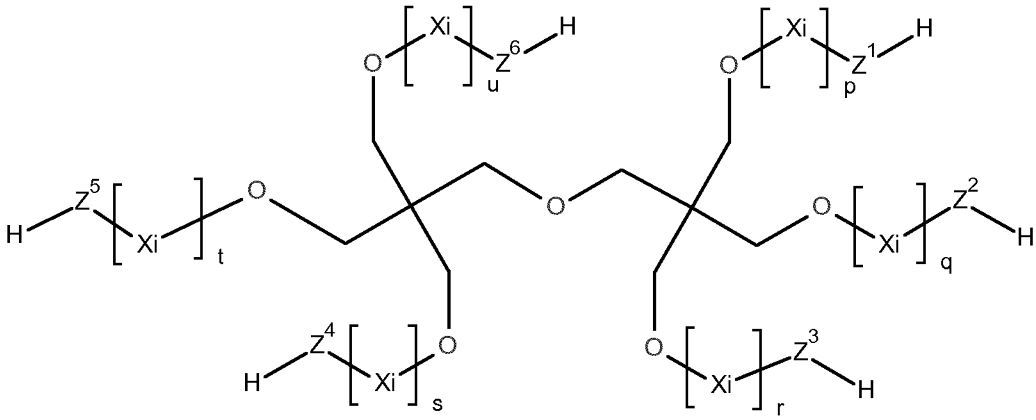

oder um Verbindungen (C2) der Formel

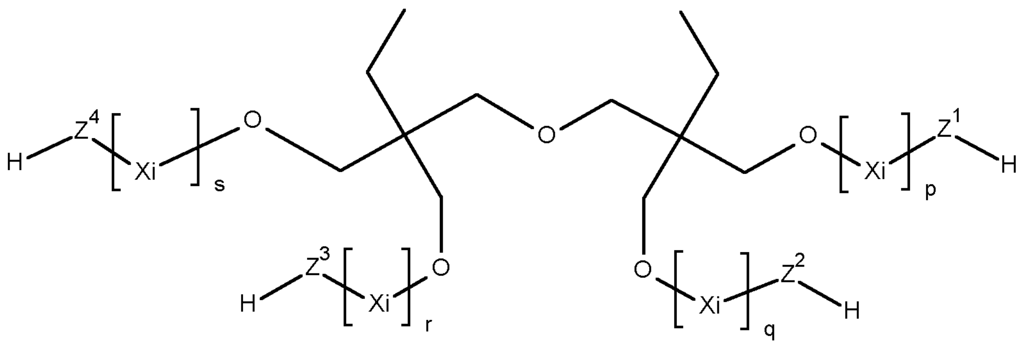

oder um Verbindungen (C3) der Formel

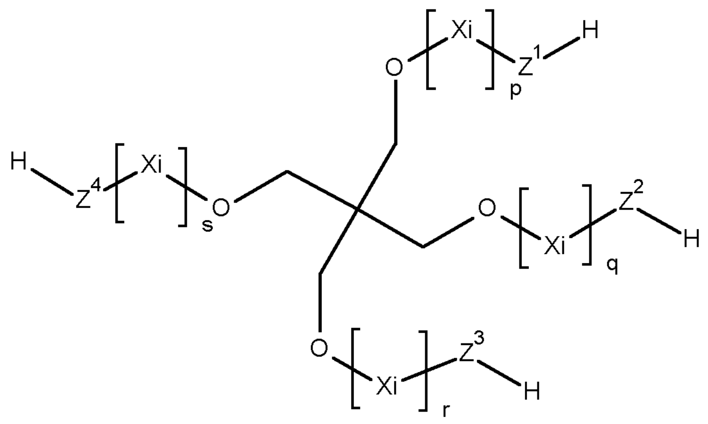

worin

$Z^1$, $Z^2$, $Z^3$, $Z^4$, $Z^5$ und $Z^6$ jeweils unabhängig voneinander ein Schwefelatom oder einen Rest der Formel -(C=O)-$R^3$-S-,

$R^3$ einen zweiwertigen $C_1$- bis $C_6$-Alkylenrest,

p, q, r, s, t, u, jeweils unabhängig voneinander Null oder eine positive ganze Zahl von 1 bis 5, bevorzugt Null oder eine positive ganze Zahl von 1 bis 4 und besonders bevorzugt Null oder eine positive ganze Zahl von 1 bis 3 und ganz besonders bevorzugt Null,

jedes $X_i$ für i = 1 bis p, 1 bis q, 1 bis r, 1 bis s, 1 bis t und 1 bis u, unabhängig voneinander ausgewählt sein kann aus der Gruppe bestehend
aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2$-CHVin-O-, -CHVin-$CH_2$-O-, $-CH_2$-CHPh-O- und -CHPh-$CH_2$-O-, bevorzugt aus der Gruppe $-CH_2-CH_2-O-$, $-CH_2-CH(CH_3)-O-$ und $-CH(CH_3)-CH_2-O-$, und besonders zugt $-CH_2-CH_2-O-$
worin Ph für Phenyl und Vin für Vinyl steht,

mit der Maßgabe, daß im Fall der Verbindungen (C1) mindestens vier, bevorzugt mindestens fünf und besonders bevorzugt alle sechs der Reste $Z^1$ bis $Z^6$ eine Gruppe der Formel -(C=O)-$R^3$-S- darstellen und im Fall der Verbindungen (C2) und (C3) mindestens drei, bevorzugt alle vier Reste $Z^1$ bis $Z^4$ eine Gruppe der Formel -(C=O)-$R^3$-S-darstellen. Die übrigen Reste $Z^1$ bis $Z^6$ bzw. $Z^1$ bis $Z^4$ stellen dann eine Einfachbindung dar.

Beispiele für $R^3$ sind Methylen, 1,2-Ethylen, 1,2-Propylen, 1,3-Propylen, 1,4-Butylen, 1,5-Pentylen und 1,6-Hexylen, bevorzugt sind Methylen, 1,2-Ethylen, 1,3-Propylen, 1,4-Butylen und 1,5-Pentylen, besonders bevorzugt sind Methylen und 1,2-Ethylen.

Weiterhin kann es sich bei den Verbindungen (C) um Verbindungen (C4) der Funktionalität zwei oder drei der Formel

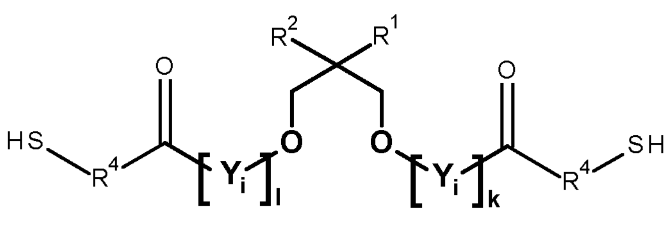

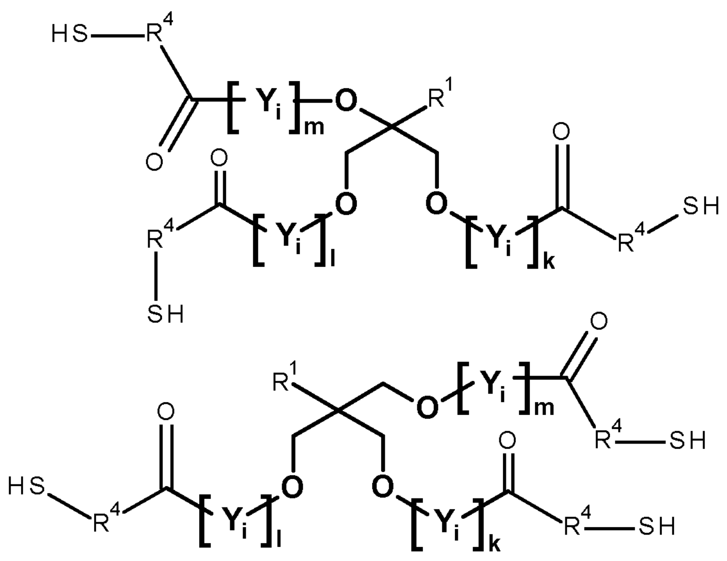

handeln, worin

$R^1$, $R^2$ jeweils unabhängig voneinander Wasserstoff oder einen $C_1$- bis $C_4$-Alkylrest,

$R^4$ Methylen oder 1,2-Ethylen,

k, l, m, n, jeweils unabhängig voneinander Null oder eine positive ganze Zahl von 1 bis 5, bevorzugt Null oder eine positive ganze Zahl von 1 bis 4 und besonders bevorzugt Null oder eine positive ganze Zahl von 1 bis 3,

jedes $Y_i$ für i = 1 bis k, 1 bis l, 1 bis m und 1 bis n, unabhängig voneinander ausgewählt sein kann aus der Gruppe bestehend
aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH(CH_3)-O-$ und $-CH(CH_3)-CH_2-O-$, und besonders zugt $-CH_2-CH_2-O-$
worin Ph für Phenyl und Vin für Vinyl steht.

Besonders bevorzugte Di- oder Trimercaptoverbindungen (C4) sind dabei die Veresterungsprodukte von 3-Mercaptopropionsäure oder Mercaptoessigsäure mit Diolen oder Triolen, wobei die Diole oder Triole ausgewählt sind aus der Gruppe bestehend aus Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, 1,2-, 1,3- oder 1,4-Butandiol, 1,6-Hexandiol, 1,10-Dekandiol, Tetramethylcyclobutandiol, 1,2-, 1,3- oder 1,4-Cyclohexandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Glycerin, sowie deren alkoxylierten, beispielsweise ethoxylierten und/oder propoxylierten, bevorzugt ethoxylierten Produkte.

Bevorzugt handelt es sich bei den di- oder trifunktionellen Verbindungen (C4) um Veresterungsprodukte von 3-Mercaptopropionsäure oder Mercaptoessigsäure mit Polyethylenglykol der Molmasse 106 bis 2000, Polypropylenglykol der Molmasse 134 bis 2500, Poly-THF der Molmasse 162 bis 2000, optional ethoxyliertem Trimethylolpropan der Molmasse 134 bis 1500 und optional ethoxyliertem Glycerin der Molmasse 92 bis 1100.

Besonders bevorzugt handelt es sich bei den di- oder trifunktionellen Verbindungen (C4) um 3-Mercaptopropionsäure Ester auf Basis von Polypropylenglykol der Molmasse 2200 (PPGMP 2200), 3-Mercaptopropionsäure Ester auf Basis von Polypropylenglykol der Molmasse 800 (PPGMP 800), Ethoxyliertes Trimethylolpropantri(3-mercaptopropionat) 1300 (ETTMP 1300), Ethoxyliertes Trimethylolpropantri(3-mercapto-propionat) 700 (ETTMP 700), Trimethylolpropantrimercaptoacetate (TMPMA), Glykoldi-(3-mercaptopropionat) (GDMP), Trimethylolpropantri-(3-mercaptopropionat) (TMPMP).

Bevorzugte derartige Verbindungen mit zwei oder drei Mercaptogruppen sind ausgewählt aus der Gruppe bestehend aus Ethylenglykoldi-(3-mercaptopropionat) (GDMP), Trimethylolpropan tri-(3-mercaptopropionat) (TMPMP), Trimethylolpropan-trimercaptoacetat (TMPMA), 3-Mercaptopropionsäureester von Poly-1,2-propylenglykol der Molmasse 500 bis 2500 g/mol oder 3-Mercaptopropionsäure-ester von ethoxyliertem Trimethylolpropan der Molmasse bis zu 1500 g/mol.

Beispiele für Verbindungen (C1) bis (C3) mit einer höheren Funktionalität sind Pentaerythritoltetra-(3-mercaptopropionat) (PETMP), Pentaerythritoltetramercaptoacetat (PETMA), Di-Pentaerythritoltetra-(3-mercaptopropionat), Di-Pentaerythritoltetramercaptoacetat, Di-Pentaerythritol-penta-(3-mercaptopropionat), Di-Pentaerythritolpentamercaptoacetat, Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat sowie deren alkoxylierten, beispielsweise ethoxylierten und/oder propoxylierten, bevorzugt ethoxylierten Produkte.

Bevorzugte Verbindungen (C1) bis (C3) sind Pentaerythritoltetra-(3-mercaptopropionat) (PETMP), Pentaerythritoltetramercaptoacetat (PETMA), Di-Pentaerythritoltetra-(3-mercapto-propionat), Di-Pentaerythritoltetramercaptoacetat, Di-Pentaerythritolpenta-(3-mercaptopropionat), Di-Pentaerythritolpentamercaptoacetat, Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat, besonders bevorzugt sind Pentaerythritoltetra-(3-mercaptopropionat) (PETMP), Pentaerythritoltetramercaptoacetat (PETMA), Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat und ganz besonders bevorzugt sind Pentaerythritoltetra-(3-mercaptopropionat) (PETMP) und Pentaerythritoltetramercaptoacetat (PETMA).

Optional können die erfindungsgemäßen Beschichtungsmasse mindestens einen Reaktivverdünner (D) enthalten mit einem zahlenmittleren Molekulargewicht $M_n$ von weniger als 1000, bevorzugt weniger als 750 und besonders bevorzugt weniger als 500 g/mol, der mindestens zwei (Meth)Acrylatgruppen aufweist.

Bei der mindestens einen, bevorzugt ein bis vier, besonders bevorzugt ein bis drei, ganz besonders bevorzugt ein bis zwei und ganz besonders bevorzugt genau einen strahlungshärtbaren Verbindung (D) mit mindestens 2 Acryloyl- oder Methacryloylgruppen, bevorzugt zwei bis zehn, besonders bevorzugt zwei bis sechs, ganz besonders bevorzugt drei bis vier Acryloyl- oder Methacryloylgruppen, bevorzugt Acryloylgruppen, handelt es sich bevorzugt um (Meth)acrylsäureester von Polyolen, bevorzugt alkoxlierten Polyolen.

Beispiele für (Meth)acrylsäureester von Polyolen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt

Bevorzugt sind (Meth)Acrylate von Verbindungen der Formel (VIIa) bis (VIId),

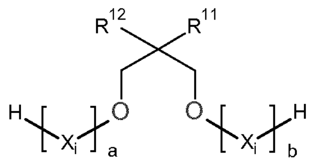

(VIIa)

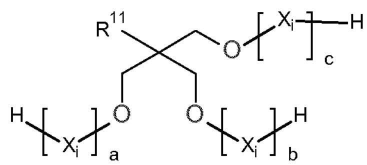

(VIIb)

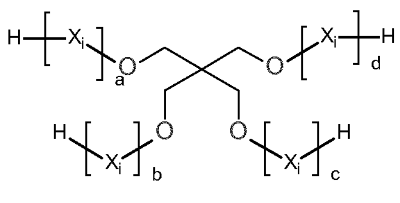

(VIIc)

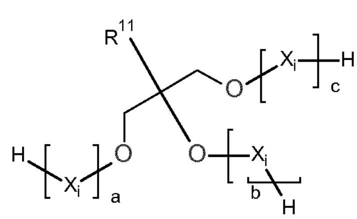

(VIId)

worin

$R^{11}$ und $R^{12}$unabhängig voneinander Wasserstoff oder gegebenenfalls durch Aryl, Alkyl, Aryloxy, Alkyloxy, Heteroatome und/oder Heterocyclen substituiertes $C_1$ - $C_{18}$-Alkyl,

a, b, c, d unabhängig voneinander je für eine ganze Zahl von 1 bis 10, bevorzugt 1 bis 5 und besonders bevorzugt 1 bis 3 steht und

jedes $X_i$ für i = 1 bis a, 1 bis b, 1 bis c und 1 bis d unabhängig voneinander ausgewählt sein kann aus der Gruppe

$-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes $C_1$ - $C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Besonders bevorzugt handelt es sich dabei um (Meth)Acrylate von nicht oder ein- bis sechsfach ethoxyliertem, propoxyliertem oder gemischt ethoxyliertem und propoxyliertem und insbesondere ausschließlich ethoxyliertem Glycerin, Trimethylolpropan, Ditrimethylolpropan, Trimethylolethan, Pentaerythrit oder Dipentaerythrit.

Ganz besonders bevorzugt sind Trimethylolpropantriacrylat, Pentaerythrittetraacrylat, und Acrylate von ein- bis sechsfach alkoxyliertem, besonders bevorzugt ethoxyliertem Trimethylolpropan, Ditrimethylolpropan, Glycerin, Pentaerythrit oder Dipentaerythrit.

Ferner kann es sich bei der Verbindungen (D) um Ethylenglykoldiacrylat, 1,2-Propandioldiacrylat, Dipropylenglycoldiacrylat, Tripropylenglycoldiacrylat, 1,3-Propandioldiacrylat, 1,4-Butandioldiacrylat, 1,3-Butandioldiacrylat, 1,5-Pentandiol-diacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat

Die erfindungsgemäßen Beschichtungsmassen sind bevorzugt wie folgt zusammengesetzt:

(S) 30 bis 80, bevorzugt 40 bis 75 Gew%,
(C) 20 bis 70, bevorzugt 25 bis 60 Gew%,
(D) 0 bis 50, bevorzugt 5 bis 30 Gew% und
(F) 0 bis 10, bevorzugt 0,5 bis 8 Gew%

mit der Maßgabe, daß die Summe immer 100 Gew% ergibt und die Stöchiometrie von Thiolgruppen in (C) zu Acrylatgruppen in (S) von 0,2:1 bis 3,8:1, bevorzugt 0,8:1 bis 2,5:1 beträgt.

Zur Beschleunigung der Addition der Thiolgruppen der Komponente (C) an die Acrylatgruppen der Komponente (S) ist bevorzugt mindestens ein Katalysator (E2) in der Beschichtungsmasse anwesend.

Als Katalysatoren (E2) für die Beschleunigung der Additionsreaktion in der Beschichtungsmasse können primäre, sekundäre und tertiäre Amine sowie quaternäre Ammoniumsalze, Imine oder Iminiumsalze eingesetzt werden. Diese können aliphatisch oder aromatisch, bevorzugt aliphatisch sein.

Bevorzugt sind tertiäres Amin, beispielsweise Trimethylamin, Triethylamin, Tri-n-butylamin, Ethyl-di-*iso*-Propylamin, Methyl-di-*iso*-Propylamin, N-Methylmorpholin, N-Methylpiperidin, Triethanolamin, N,N-Dimethylethanolamin, N-Methyldicyclohexylamin, Dimethylcyclohexylamin, Diethylcyclohexylamin, Methyldicyclohexylamin, Ethyldicyclohexylamin, 4-N,N-Dimethylaminopyridin, 1,5-Diazabicyclo[4.3.0]-non-5-en (DBN), 1,8-Diazabicyclo[5.4.0]-undec-7-en (DBU), Tetramethylguanidin, Pyrrocolin, Chinuclidin, 3-Hydroxychinuclidin, Chinidin, bevorzugt 1,4-Di-aza-bicyclo[2,2,2]octan (DABCO), 1,5-Diazabicyclo[4.3.0]-non-5-en (DBN), 1,8-Diazabicyclo[5.4.0]-undec-7-en (DBU), N-Methyldicyclohexylamin, Chinuclidin, 3-Aminochinuclidin und 3-Hydroxychinuclidin, besonders bevorzugt N-Methyldicyclohexylamin, 3-Aminochinuclidin und 3-Hydroxychinuclidin.

Der Katalysator wird in der Regel in Mengen von 0,1 bis 15 Gew% bzgl. der Summe aus (S) und (C) eingesetzt, bevorzugt 0,2 - 10, besonders bevorzugt 0,5 - 8 und ganz besonders bevorzugt 1 bis 5 Gew%.

Weiterhin können die Beschichtungsmassen zur Härtung optional mindestens einen Photoinitiator (F) und/oder optional weitere für die jeweilige Beschichtung typische Additive enthalten.

Photoinitiatoren (F) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF SE), Ethyl-2,4,6-tri-methylbenzoylphenylphosphinat (Lucirin® TPO L der BASF SE), Bis-(2,4,6-trimethylbenzoyl)-phenylphosphinoxid (Irgacure® 819 der Firma BASF SE), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, $\alpha$-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, $\beta$-Methylanthrachinon, *tert*-Butylanthrachinon, Anthrachi-

noncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethyl-thioxanthon, 2,4-Di-*iso*-propylthioxanthon, 2,4-Dichlorthioxanthon, Benzoin, Benzoin-*iso*-butyl-ether, Chloroxanthenon, Benzoin-tetrahydropyranylether, Benzoin-methylether, Benzoinethyl-ether, Benzoinbutylether, Benzoin-*iso*-propylether, 7-H-Benzoin-methylether, Benz[de]an-thracen-7-on, 1-Naphthaldehyd, 4,4'-Bis(dimethylamino)benzophenon, 4-Phenylben-zophenon, 4-Chlorbenzophenon, Michlers Keton, 1-Acetonaphthon, 2-Acetonaphthon, 1-Benzoylcyclo-hexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Als weitere typische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80 °C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin® -Marken der BASF SE) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die erfindungsgemäßen Beschichtungsmassen können verwendet werden zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Es stellt einen Vorteil der vorliegenden Erfindung dar, daß die erfindungsgemäßen Beschichtungsmassen anders als Zweikomponenten Epoxyharze auch noch bei Umgebungstemperaturen von nicht mehr als 5 °C aushärten, sogar bei nicht mehr als 0 °C und speziell bei nicht mehr als -4 °C.

In einer bevorzugten Ausführungsform können die erfindungsgemäßen Beschichtungsmassen eingesetzt werden als Klebstoffe, bevorzugt zur Verklebung von Substraten auf dieselben oder andere Substrate. Bevorzugt ist dabei die Verklebung von Metallen, Kunststoffen, mineralischen Baustoffen, Holz und Glas in Form eines Strukturklebstoffes. Bevorzugte Anwendungen sind das Kleben im Baubereich, beispielsweise zur Reparatur, im Automobilbereich oder Flugzeugbau sowie als Universalklebstoff, beispielsweise für Handwerker.

Eingesetzt werden können derartige Beschichtungsmassen weiterhin insbesondere in Grundierungen, Füllern, pigmentierten Decklacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die erfindungsgemäßen Beschichtungsmassen eignen sich zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien, besonders bevorzugt Metallen.

Die erfindungsgemäßen Beschichtungsmassen eignen sich als oder in Außenbeschichtungen, also in solchen Anwendungen, die dem Tageslicht ausgesetzt sind, bevorzugt von Gebäudeteilen, Innenbeschichtungen, Beschichtungen auf Fahrzeugen und Flugzeugen. Insbesondere werden die erfindungsgemäßen Beschichtungsmassen als oder in Automobilklar- und -decklacken eingesetzt. Weitere bevorzugte Einsatzgebiete sind Can-Coating und Coil-Coating.

Die erfindungsgemäßen Beschichtungsmassen eignen sich in einer bevorzugten Ausführungsform als Korrosionsschutz aufgrund der exzellenten Haftung auf Eisenmetallen, insbesondere auf Stahl, der exzellenten Wasser- und Temperaturbeständigkeit sowie deren Dehnbarkeit.

Die erfindungsgemäßen Beschichtungsmassen eignen sich ferner als Grundierungen, Füller, pigmentierte Decklacke und Klarlacke im Bereich Industrie-, Holz-, Auto-, insbesondere OEM-Lackierung, oder Dekolackierung. Ganz besonders geeignet sind die Beschichtungsmittel für Anwendungen, in denen eine besonders hohe Applikationssicherheit, Außenwitterungsbeständigkeit, Optik, Kratzbeständigkeit, Lösemittel- und/oder Chemikalienbeständigkeit gefordert werden.

Besonders eignen sich die erfindungsgemäßen Beschichtungsmassen für die Anwendung im Baubereich wie zum Beispiel für Industriefußböden, Abdichtmembranen (so genannten *water-proofing membranes*), Dichtstoffe sowie als Reparaturkleber aufgrund ihrer hervorragenden Haftung zu zementären Materialien, wie Beton, Mörtel, etc., sowie auch zu Baustahl. Aufgrund der speziellen chemischen Struktur, der Fähigkeit des Beschichtungssystems auch bei tiefer Temperatur rasch und klebfrei auszuhärten und der Kombination von Festigkeit und Dehnung sind die Systeme hier besonders geeignet. Vergleichbare Epoxidharzbasierte Materialien weisen diese Eigenschaften in Summe nicht auf, vergleichbare radikalgestartete Acrylbasierte systeme weisen in der Regel eine schlechtere Haftung auf und/oder sind schwieriger zu formulieren und anzuwenden.

Die erfindungsgemäßen Beschichtungssysteme ermöglichen beispielsweise die Anwendung bei der Herstellung von Parkdeckbeschichtungen, die auch in den Wintermonaten ausführbar werden oder auch die Verarbeitung in Kühlhäusern ohne dass diese abgeschaltet und erwärmt werden müssen. Dadurch kann deutlich anwendungsnäher, kosten- und energieeffizienter gearbeitet werden.

Neben den Komponenten (S), (C), (D) sowie optional (E) und (F) kann die erfindungsgemäße Zusammensetzung zusätzliche weitere Komponenten enthalten. Dies können unter anderem die folgenden Hilfs- und Zusatzstoffe sein:

- Haftvermittler, beispielsweise Epoxysilane, Anhydridosilane, Addukte von Silanen mit primären Aminosilanen, Ureidosilane, Aminosilane, Diaminosilane, sowie deren Analoga als Monomer oder Oligomer und Harnstoffsilane; z.B. Dynasylan® AMEO, Dynasylan AMMO, Dynasylan DAMO-T, Dynasylan 1146, Dynasylan 1189, Silquest® A-Link 15, Epoxidharze, Alkyltitanate, Titanchelate, aromatische Polyisocyanate, Phenolharze; die beispielsweise der allgemeinen Formel:

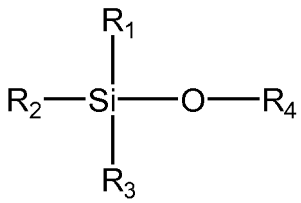

worin

$R_1$, $R_2$ und $R_3$ unabhängig voneinander Halogen, Amin, Wasserstoff, Alkoxy-, Acyloxy-, Alkyl-, Aryl-, Aralkyloxy-, Alkylaryl-, Aralkylgruppen sowie Alkylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Methacryloxy- und Vinylgruppen sowie
Arylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Methacryloxy- und Vinylgruppen sowie
Alkylarylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Methacryloxy- und Vinylgruppen sowie
Aralkylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Methacryloxy-, und Vinylgruppen,
$R_4$Alkyl und Aryl
entsprechen.

- Wasserfänger z. B. Vinyltriethoxysilan, Vinyltrimethoxysilan, α-funktionelle Silane wie N-(Si-lylmethyl)-O-methyl-carbamate, insbesondere N-(Methyldimethoxy-silylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsieb;

- Licht- und Alterungsschutzmittel, welche insbesondere als Stabilisatoren gegen Wärme, Licht und UV-Strahlung wirken, beispielsweise phenolische Antioxidanzien welche als Radikalfänger fungieren, wie 2,6-Di-tert-butyl-p-cresol, 2,6-Di-tert-butylphenol, 2,4-Dimethyl-6-tert-butylphenol, 2,2'-Methylene-bis(4-methyl-6-tert-butylphenol), 4,4'-Butyliden-bis(3-me-thyl-6-tert-butylphenol), 4,4'-Thio-bis(3-methyl-6-tert-butylphenol), 5-Tetrakis[methylene-3-(3,5-di-tert-butyl-4-hydroxyphenyl)propionat]methane und 1,1,3-Tris(2-methyl-4-hydroxy-5-tert-butylphenyl)butane und Antioxidanzien auf Basis von Aminen (beispielsweise Phenyl-β-naphthylamin, α-Naphthylamin, N,N'-Di-sec-butyl-p-phenylendiamin, Phenothiazin und N,N'-Diphenyl-p-phenylendiamine)

- Flammschutzmittel, z.B. $Al(OH)_3$, Huntit, bromierte Alkyl- und Arylverbindungen;

- Biozide, wie bspw. Algizide, Fungizide oder das Pilzwachstum hemmende Substanzen, z.B. Ag, $Ag^+$, $CH_2O$-abspaltende Verbindungen;

- Füllstoffe, z. B. gemahlene oder gefällte Calciumcarbonate, welche ggf. mit Fettsäuren bzw. Fettsäurengemischen beschichtet sind, z.B. Stearate, insbesondere feinteiliges beschichtetes Calciumcarbonat, Ruße, insbesondere industriell hergestellte Ruße, Kaoline, Aluminiumoxide, Kieselsäuren, insbesondere hochdisperse Kieselsäure aus Pyrolyseprozessen, PVC-Pulver oder Hohlkugeln. Bevorzugte Füllstoffe sind Ruß, Calciumcarbonate, wie bspw. gefällte oder natürliche Kreidetypen wie Omya 5 GU, Omyalite 95 T, Omyacarb 90 T, Omyacarb 2 T-AV® der Fa. Omya, Ultra P-Flex® der Fa. Specialty Minerals Inc, Socal® U1S2, Socal® 312, Winnofil® 312 der Fa. Solvay, Hakuenka® der Fa. Shiraishi, hochdisperse Kieselsäuren aus Pyrolyseprozessen sowie Kombinationen aus diesen Füllstoffen. Ebenfalls geeignet sind Mineralien wie Kieselerde, Talk, Calciumsulfat (Gips) in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Hectosilicate, die Gruppe der schwerlöslichen Sulfate wie Gips, Anhydrit oder Schwerspat ($BaSO_4$) sowie Calciummineralien wie Calcit, pulverförmige Metalle (beispielsweise Aluminium, Zink oder Eisen) und Bariumsulfat;

- Rheologie-Modifizierer, wie Verdickungsmittel, z. B. Harnstoffverbindungen sowie Monoamine , z.B. n-Butylamin, Methoxybutylamin und Polyamidwachse, Bentonite, Silicone, Polysiloxane, hydriertes Rizinusöl, Metallseifen, wie Calciumstearat, Aluminumstearat, Barium-stearat, gefällte Kieselsäure, pyrogene Kieselsäure sowie Poly(oxy-1,2-ethandiyl)-α-hydro-Ω-hydroxy-polymer mit Oxy-1,2-ethandiyl-α -hydro-Ω-hydroxy-nonylphenoxyglycidylether Oligomeren und 5-Isocyanato-1-(iso-cyanatomethyl)-1,3,3-trimethylcyclohexan oder Hydroxyethylcellulose oder Polyacrylsäure-Polymere und Copolymere;

- Oberflächenaktive Substanzen wie bspw. Netzmittel, Verlaufsmittel, Entlüftungsmittel, Entschäumer und Dispergiermittel;

- Fasern, bspw. aus Kohlenstoff, Polyethylen oder Polypropylen, $SiO_2$, Cellulose;

- Pigmente, bspw. Titandioxid;

- Lösemittel wie etwa Wasser, Solvent Naphta, Methylester, aromatische Kohlenwasserstoffe wie Polyalkylbenzole,Toluol und Xylol, Lösungsmittel auf Basis von Estern wie Ethylacetat, Butylacetat, Allylacetat und Celluloseacetat und Lösungsmittel auf Basis von Ketonen wie Methylethylketon, Methylisobutylketon und Diisobutylketon sowie Aceton und Mischungen aus mindestens zwei der vorgenannten Lösungsmittel

sowie weitere in Kleb- und Dichtstoffen eingesetzte Substanzen.

Als weitere Komponenten können die erfindungsgemäßen Kleb- und Dichtstoffe weitere Weichmacher enthalten.

Der erfindungsgemäße Kleb- oder Dichtstoff enthält in einer Ausführungsform 1 bis 80 Gew.-% Füllstoffe, 0 bis 50 Gew.-% Wasser und/oder Lösemittel und 0 bis 20 Gew.-% Rheologiemodifizierer. Bevorzugt ist eine Menge von

30 bis 55 Gew.-% Füllstoffen.

Ein weiterer Gegenstand der vorliegenden Erfindung ist die Verwendung des Kleb- oder Dichtstoffes als Ein- oder Zwei-Komponenten-System zur Herstellung von stoffschlüssigen Verbindungen zwischen Fügeteilen. Die erfindungsgemäße Zusammensetzung verfügt im ausgehärteten Zustand über eine hohe mechanische Festigkeit bei einer hohen Dehnbarkeit sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Geeignete Anwendungen sind bspw. die stoffschlüssigen Verbindungen zwischen Fügeteilen aus Beton, Mörtel, Glas, Metall, Keramik, Kunststoff und/oder Holz. In einer besonderen Ausführungsform handelt es sich bei den Fügeteilen zum einen um eine Oberfläche und zum anderen um einen Teppichbelag, einen PVC-Belag, ein Laminat, einen Gummibelag, einen Korkbelag, einen Linoleumbelag, einen Holzbelag, z.B. Parkett, Dielen, Schiffsboden oder Fliesen. Insbesondere kann die erfindungsgemäße Zusammensetzung für das verfugen von Natursteinen verwendet werden. Weiterhin können die erfindungsgemäßen Kleb- und Dichtstoffe für die Fertigung oder Reparatur von industriellen Gütern oder Konsumgütern eingesetzt werden sowie für das Abdichten oder Verkleben von Bauteilen im Hoch- oder Tiefbau sowie insbesondere im Sanitärbereich. Im speziellen kann es sich bei den Fügeteilen um Teile im Auto-, Trailer-, LKW-, Wohnwagen-, Zug-, Flugzeug-, Schiff- und Gleisbau handeln.

Ein Klebstoff für elastische Verklebungen in diesem Bereich wird bevorzugt in Form einer Raupe in einer im Wesentlichen runden oder dreieckigen Querschnittsfläche aufgetragen. Elastische Verklebungen im Fahrzeugbau sind bspw. das Ankleben von Teilen wie Kunststoffabdeckungen, Zierleisten, Flansche, Stossstangen, Führerkabinen oder andere Anbauteile an die lackierte Karosserie eines Transportmittels oder das Einkleben von Scheiben in die Karosserie.

Ein bevorzugter Anwendungsbereich im Hoch- und Tiefbau sind Hochbaufugen, Bodenfugen, Fugen nach dem Wasserhaushaltsgesetz, Anschlussfugen, Dehnfugen oder Dichtfugen im Sanitärbereich. In einer bevorzugten Ausführungsform wird die beschriebene Zusammensetzung als elastischer Kleb- oder Dichtstoff eingesetzt. Als elastischer Klebstoff weist die Zusammensetzung typischerweise eine Bruchdehnung von mindestens 5 % und als elastischer Dichtstoff von mindestens 300 % bei Raumtemperatur auf.

Für eine Anwendung der Zusammensetzung als Dichtstoff für bspw. Fugen im Hoch- oder Tiefbau oder für eine Anwendung als Klebstoff für elastische Verklebungen bspw. im Fahrzeugbau weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Fügeteil aufgetragen. Geeignete Methoden zum Auftragen sind bspw. die Applikation aus handelsüblichen Kartuschen, Schlauchbeuteln oder in Kartuschen eingelegten Schlauchbeuteln, welche manuell oder mittels Druckluft betrieben werden oder aus einem Fass oder Hobbock mittels einer Förderpumpe oder einer Exzenterschneckenpumpe, ggf. mittels eines Applikationsroboters.

Die Fügeteile können bei Bedarf vor dem Applizieren des Kleb- oder Dichtstoffes vorbehandelt werden. Derartige Vorbehandlungen umfassen insbesondere physikalische und/oder chemische Reinigungsverfahren bspw. Schleifen, Sandstrahlen, Bürsten oder dgl. oder Behandeln mit Reinigern oder Lösemitteln oder das Aufbringen eines Haftvermittlers, einer Haftvermittlerlösung oder eines Primers.

Bei der Anwendung als Klebstoff wird die erfindungsgemäße Zusammensetzung entweder auf das eine oder das andere Fügeteil oder auf beide Fügeteile appliziert. Danach werden die zu klebenden Teile gefügt, worauf der Klebstoff aushärtet. Es ist jeweils darauf zu achten, dass das Fügen der Teile innerhalb der sog. Offenzeit erfolgt, um zu gewährleisten, dass die beiden Fügeteile verlässlich miteinander verklebt werden.

Ein weiterer Gegenstand der vorliegenden Erfindung ist ein Verfahren zur Herstellung eines Kleb- oder Dichtstoffes, wobei weitere Komponenten, insbesondere aus der Reihe Füllstoffe, Thixotropiermittel, Antioxidans und UV-Absorber, Lösungsmittel und Haftvermittler vorgelegt und gemischt werden,

Für das erfindungsgemäße Herstellverfahren ist es als bevorzugt anzusehen, dass die eingesetzten Komponenten während des gesamten Prozesses, miteinander gemischt bzw. in Bewegung gehalten werden. Alternativ können die eingesetzten Komponenten auch erst am Ende des Herstellverfahrens miteinander gemischt werden. Als Mischeinrichtungen eignen sich alle dem Fachmann hierfür bekannten Vorrichtungen, insbesondere kann es sich um einen statischen Mischer, Planetenmischer, horizontalen Turbulentmischer (Fa. Drais), Planetendissolver bzw. Dissolver (Fa. PC Laborsysteme), Intensivmischer und/oder Extruder handeln.

Das erfindungsgemäße Verfahren zur Herstellung des Kleb- oder Dichtstoffes kann diskontinuierlich bspw. in einem Planetenmischer durchgeführt werden. Es ist aber auch möglich, das Verfahren kontinuierlich zu betreiben, wobei sich hierfür insbesondere Extruder als geeignet erwiesen haben. Hierbei wird das Bindemittel in den Extruder gegeben und flüssige sowie feste Zuschlagsstoffe zudosiert.

In einer bevorzugten Ausführungsform enthalten die erfindungsgemäßen Beschichtungsmassen bis zu 50 Gew% mindestens eines Pigments. Während in ausschließlich strahlungshärtbaren Beschichtungsmassen die Pigmente in der Regel die eingestrahlte UV-Strahlung zumindest teilweise absorbieren und so eine Strahlungshärtung erschweren oder gar unterbinden, verfügen die erfindungsgemäßen Beschichtungsmassen mit der Addition der Thiolgruppen an

die Acrylatgruppen über einen weiteren Härtungsmechanismus und liefern auch dort gehärtete Beschichtungen, wo die Einstrahlung von UV-Strahlung keine oder keine ausreichende Härtung ergibt.

Pigmente sind in Wasser praktisch nicht lösliche feinteilige organische oder anorganische Farbmitteln gemäß der Definition in DIN 55944. Bevorzugt geht man zur Herstellung bzw. Formulierung von erfindungsgemäßen Systemen von organischen Pigmenten aus, wobei Ruß mit umfasst ist. Des weiteren sind Weißpigmente gleichermaßen bevorzugt, insbesondere Titandioxid. Im Folgenden sind Beispiele für besonders gut geeignete Pigmente genannt.

Organische Pigmente:

- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260; C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz); C.I. Pigment Yellow 101 (Aldazingelb);C.I. Pigment Brown 22.

Anorganische Pigmente:

- Weißpigmente: Titandioxid (C.I. Pigment White 6), Zinkweiß, Farbenzinkoxid,

Bariumsulfat, Zinksulfid, Lithopone; Bleiweiß; Calziumcarbonat;

- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot; Eisenoxidbraun, Mischbraun, Spinell- und Korundphasen (C.I. Pigment Brown 24, 29 und 31), Chromorange; Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente, Weißpigmente und Ruße zu nennen.

Beispiele für besonders bevorzugte Pigmente sind im einzelnen: Ruß, Titandioxid, C.I. Pigment Yellow 138, C.I. Pigment Red 122 und 146, C.I. Pigment Violet 19, C.I. Pigment Blue 15:3 und 15:4, C.I. Pigment Black 7, C.I. Pigment Orange 5, 38 und 43 und C.I. Pigment Green 7.

In einer besonders bevorzugten Ausführungsform werden die erfindungsgemäßen Beschichtungsmassen verwendet zur Beschichtung poröser Substrate, bei denen eine Bestrahlung nicht die gesamte Beschichtungsmasse durchdringen kann. Bevorzugt handelt es sich dabei um mineralische Baustoffe, bevorzugt Beton, Mörtel, Zement-Formsteine und Faserzementplatten, aber auch Eisenmetalle, insbesondere Stahl.

Vor der Applikation sind die erfindungsgemäßen Beschichtungsmassen durch Vermischen zumindest der Komponenten (S) und (C), sowie optional zusätzlich den Komponenten (D) und/oder (F) sowie optional weiteren Additiven erhältlich.

Dabei kann es sinnvoll sein, die optionalen Komponenten (D) und/oder (F) und/oder weitere Additive vor dem Vermischen bereits in eine der Komponenten (S) und (C) einzumischen, so daß man diese als Master Batch Formulierung vorhalten kann. In diesem Fall verringert sich die Herstellung der erfindungsgemäßen Beschichtungsmassen auf das Vermischen zweier Komponenten.

Es ist auch möglich, alle Komponenten mit Ausnahme des Katalysators (E) miteinander zu vermischen und die Härtung dann durch Zugabe und Untermischung des Katalysators (E) zu starten.

Nach dem Vermischen der Komponenten bzw. Zugabe des Katalysators (E) hat die Beschichtungsmasse in der Regel eine Topfzeit bis zu 3 Stunden, bevorzugt bis zu 2 Stunden, besonders bevorzugt von 1 bis 90 Minuten, ganz besonders bevorzugt von 2 bis 60 Minuten und insbesonders von 5 bis 45 Minuten.

Soll die Topfzeit der Beschichtungsmasse verlängert werden, so können der Beschichtungsmasse ein oder mehrere Stabilisatoren zugesetzt werden, wie es in WO 2012/126695 beschrieben ist.
Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und optional trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Beschichtungsstärke liegt in der Regel in einem Bereich von etwa 3 bis 1000 g/$m^2$ und vorzugsweise 10

bis 200 g/m$^2$.

Weiterhin wird ein Verfahren zum Beschichten von Substraten offenbart, bei dem man das eine erfindungsgemäßen Beschichtungsmasse oder eine solche enthaltende Lackformulierung, optional mit weiteren lacktypischen Additiven und thermisch, chemisch oder starhlungshärtbaren Harzen versetzt, auf das Substrat aufbringt und optional trocknet, mit Elektronenstrahlen oder UV Belichtung unter Inertgas oder bevorzugt unter sauerstoffhaltiger Atmosphäre härtet, optional bei Temperaturen bis zur Höhe der Trocknungstemperatur und anschließend bei Temperaturen bis zu 160°C, bevorzugt zwischen 60 und 160 °C, besonders bevorzugt zwischen 100 und 160 °C, thermisch behandelt.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der $T_g$ des strahlungshärtbaren Bindemittels.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die erfindungsgemäße Beschichtungsmasse oder solche enthaltende Lackformulierungen, optional mit thermisch härtbaren Harzen versetzt, auf das Substrat aufbringt, trocknet, und anschließend mit Elektronenstrahlen oder UV Belichtung unter Inertgas oder bevorzugt unter sauerstoffhaltiger Atmosphäre härtet, optional bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160 °C, bevorzugt zwischen 60 und 160 °C, thermisch behandelt und anschließend mit Elektronenstrahlen oder UV Belichtung unter Inertgas oder bevorzugt unter Sauerstoff endhärtet.

Optional kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von $\lambda$=200 bis 700 nm strahlt, besonders bevorzugt von $\lambda$=200 bis 500 nm und ganz besonders bevorzugt $\lambda$=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), LED-Lampen, Halogenlampen oder Excimerstrahler. Die üblicherweise zur Vernetzung ausreichende Strahlungsdosis bei UV-Härtung liegt im Bereich von 80 bis 3000 mJ/cm$^2$.

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 $\mu$m, bevorzugt von 900 bis 1500 nm bezeichnet ist.

Die Bestrahlung kann optional auch unter Ausschluß von Sauerstoff, z. B. unter InertgasAtmosphäre, durchgeführt werden. Als Inertgase eignen sich vorzugsweise Stickstoff, Edelgase, Kohlendioxid, oder Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Es stellt einen Vorteil der erfindungsgemäßen Beschichtungsmassen dar, daß sie auch bei Härtung unter einer sauerstoffhaltigen Atmosphäre ähnlich gute Beschichtungseigenschaften ergeben, wie bei Härtung unter einer Inertatmosphäre.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

Beispiele

Herstellung von erfindungsgemäßen Produkten S

Addukt (A): Ein oligomeres Addukt (Typ Sz) von 1,4-Butandiol-diacrylat (Laromer® BDDA, BASF SE) und Terephthalaldehyd:

DABCO (0,075 mol; 8,413 g) wurde einer Suspension von 1,4-Butandioldiacrylat (1,800 mol; 356,788 g) und Terephthalaldehyd (1,500 mol; 201,198 g) in Tetrahydrofuran (THF, 300 mL) hinzugefügt. Das resultierende Gemisch wurde für 48h bei 60°C gerührt. Im Anschluss daran wurde THF im Grobvakuum entfernt. Das übriggebliebene Gemisch wurde in Ethylacetat aufgenommen und mit 10%iger HCl gewaschen um die Reste des Katalysators zu entfernen. Die organische Fraktion wurde dann über Magnesiumsulfat ($MgSO_4$) getrocknet, filtriert und das Lösungsmittel im Vakuum enfernt. Zur weiteren Aufreinigung wurde das Gemisch für 12h bei 80°C und 1 mbar behandelt.

Gelpermeationschromatographie (GPC) in THF mit PMMA-Standard ergab ein $M_w$ von 1100 g/mol und ein $M_n$ von 910 g/mol. Das Produkt war eine klare, gelb gefärbte viskose Flüssigkeit.

Weitere, erfolgreich angewandte Möglichkeiten den Katalysator zu entfernen oder zu deaktivieren waren

- Filtraton des Reaktionsgemisches über feste Polyacrylsäure (z.B. SOKALAN®-Typen, BASF SE) oder
- Neutralisation des Katalysators mit einer Säure, wie z.B. Benzoesäure oder Toluolsulfonsäure.

Weiterhin war alternativ die Verwendung des Phosphinkatalysators Diphenylmethylphosphin (0,075 mol) möglich.

Addukt (B): Addukt (Typ S2) aus Benzaldehyd und Laromer® BDDA:

3-Hydroxychinuclidin (0,125 mol, 15,898 g) wurde einem Gemisch bestehend aus1,4-Butandiol-diacrylat (1,000 mol, 198,216 g) und Benzaldehyd (1,000 mol, 106,122 g) hinzugefügt und die Mischung für 24 h bei 50°C gerührt. Dann wurde Diethylether zugegeben und die organische Phase zuerst mit 10%iger wässriger HCl dann mit gesättigter Natriumhydrogensulfat ($NaHSO_3$)-Lösung gewaschen. Die organische Fraktion wurde dann über $MgSO_4$ getrocknet, filtriert und das Lösungsmittel im Vakuum enfernt. Das Produkt wurde als klare Flüssigkeit erhalten.

Addukt (C): Addukt (Typ S1) von Benzaldehyd mit Ethylacrylat

3-Hydroxychinuclidin (0,050 mol, 6,359 g) wurde einem Gemisch bestehend aus Ethylacrylat (1,000 mol, 100,116 g), Benzaldehyd (1,000 mol, 106,122 g) und Ethanol (10 mL) hinzugefügt und für 72 h bei 50°C gerührt. Dann wurde Diethylether zugegeben und die organische Phase zuerst mit 10%iger wässriger HCl dann mit gesättigter $NaHSO_3$-Lösung gewaschen. Die organische Fraktion wurde dann über $MgSO_4$ getrocknet, filtriert und das Lösungsmittel im Vakuum enfernt. Das Produkt wurde als klare Flüssigkeit erhalten.

Addukt (D): Ein oligomeres Addukt (Typ Sz) von Neopentylglycoldiacrylat mit Terephthalaldehyd:

3-Hydroxychinuclidin (0,005 mol; 0,636 g) wurde einer Suspension von Neopentylglycoldiacrylat (0,110 mol; 23,346 g) und Terephthalaldehyd (0,100 mol; 13,413 g) in THF (300 mL) hinzugefügt und für 48 h bei 60°C gerührt. Nach dem Entfernen des Lösungsmittels wurde der Rückstand in Dichlormethan aufgenommen und die organische Phase zuerst mit 10%iger wässriger HCl, dann mit gesättigter $NaHSO_3$-Lösung gewaschen. Die organische Fraktion wurde dann über $MgSO_4$ getrocknet, filtriert und das Lösungsmittel im Vakuum enfernt. Zur weiteren Aufreinigung wurde das Gemisch für 12h bei 80°C und 1 mbar behandelt.

GPC in THF mit PMMA-Standards ergab ein $M_w$ von 640 g/mol und ein $M_n$ von 570 g/mol. Das Produkt war eine klare, gelb gefärbte viskose Flüssigkeit.

Addukt (E): Herstellung des Addukts (Typ S2) aus Pentaerithritoltriacrylat und Benzaldehyd:

100,0 g (0,335 mol) Pentaerithritoltriacrylat wurde mit 106,7g Benzaldehyd (1,0 mol) und 3,37g DABCO (30 mmol) vermischt und für 48h bei 60°C gerührt. Anschließend wurde das Gemisch in THF aufgenommen und der Katalysator durch Filtration über feste Polyacrylsäure (SOKAL-AN® PA 40, BASF SE) entfernt. Dann wurde THF im Vakuum entfernt. Das resultierende Produkt war eine klare Flüssigkeit.

Addukt (F): Herstellung des Addukts (Typ S2) aus Dipentaerythritol-penta-/hexaacrylat und Benzaldehyd:

17,9 g (0,060 mol) Dipentaerythritol-penta-/hexaacrylat wurde mit 19,1 g Benzaldehyd (0,180 mol) und 0,760 g 3-HQD (6,00 mmol 3-Hydroxychinuclidin) vermischt und für 96 h bei 60°C gerührt. Anschließend wurde der Katalysator durch Neutralisation mit Benzoesäure entfernt. Das resultierende Produkt war eine klare Flüssigkeit.

Aushärtung von Addukten S: Beispiele für verschiedene Formulierungen

Alle angegebenen Formulierungen wurden bei Raumtemperatur ausgehärtet und basieren auf den oben hergestellten Addukten (A) bis (F). Höhere Temperaturen bei der Aushärtung sind möglich, führen zu schnellerer Aushärtung und zu Materialien mit einer um ca. 20% höheren Endhärte.

Beispiel 1: Formulierung eines Zweikomponentensystems als Strukturklebstoff

9 g Addukt (A) = Komponente 1
10,4 g Pentaerythritol-tetrakis-(3-mercapto-propionat) (Vernetzer) gemischt mit 80 mg N-Methyldicyclohexylamin (Katalysator) = Komponente 2

Komponente 1 wurde mit Komponente 2 gemischt. Nach 2 h Aushärtung bei Raumtemperatur hatte das System eine Shore A Härte von 76 und nach 14 Tagen Aushärtung eine Shore D Härte von 70. Ein Zugversuch des gehärteten Materials nach 14 Tagen ergab eine Zugfestigkeit von 10,1 $N/mm^2$ bei einer Dehnung von 10-40%. Gemessen wurden Schulterprüfkörper nach ISO 527, ASTM D 638, im Gerät Z 250 SN (AllroundLine).

Scherzugversuche des ausgehärteten Harzes nach 1 Woche Lagerung bei Raumtemperatur auf verschiedenen Substraten ergaben folgende Haft-Zugfestigkeiten:

Polypropylen/Polypropylen: 0,5 $N/mm^2$
Glas/Glas: 1,3 $N/mm^2$
Aluminium/Aluminium: 1,5 $N/mm^2$
Holz/Holz: 2,5 $N/mm^2$
Stahl/Stahl: 5,5 $N/mm^2$
Beton/Beton: >3,5 $N/mm^2$ (Beton brach kohäsiv)
Gemessen wurde mit dem Gerät Z 250 SN (AllroundLine), Vorkraft = 2 N, Prüfgeschwindigkeit = 0,5 mm/min, Klebefläche 360mm.

Eine weitere Besonderheit dieser Klebstoff-Formulierung ist, dass sie bei -4°C klebfrei ausgehärtet werden konnte.
Vergleichsversuche mit auf Epoxyd-Harz basierenden Systemen nach dem Stand der Technik (UHU Endfest 300® (Fa. UHU) und Sikadur® 31 CF Baukleber (Fa. SIKA) zeigten, daß es nicht möglich ist diese herkömmlichen Systeme unter 0°C auszuhärten.

Beispiel 2: Formulierung mit Reaktivverdünner

4,5 g Addukt (A) und 4,5 g Laromer® BDDA (1,4-Butandioldiacrylat, Reaktivverdünner) = Komponente 1
10,4 g Pentaerythritol-tetrakis-(3-mercapto-propionat) (Vernetzer) gemischt mit 80 mg N-Methyldicyclohexylamin (Katalysator) = Komponente 2

Komponente 1 wurde mit Komponente 2 gemischt. Nach 5 h Aushärtung bei Raumtemperatur hatte das Material eine Shore A Härte von 61. Das hier beschriebene Material ist etwas weicher als Formulierung aus Beispiel 1, das System ist jedoch wesentlich fließfähiger und höher füllbar mit Zuschlagstoffen, was z.B. für eine Verwendung als Verlaufsmasse im Baubereich vorteilhaft ist.

Beispiel 3: Formulierung eines gefüllten Systems

4,5 g Addukt (A), 4,5 g Laromer® BDDA (1,4-Butandioldiacrylat, Reaktivverdünner), 19,4 g Calciumcarbonat

($CaCO_3$)-Pulve (Füllstoff), Entschäumer Tego Airex® 940 = Komponente 1 10,4 g Pentaerythritol-tetrakis-(3-mercapto-propionat) (Vernetzer) und 80 mg N-Methyldicyclohexylamin (Katalysator) = Komponente 2

Komponente 1 wurde mit Komponente 2 gemischt. Nach 5 h Aushärtung bei Raumtemperaturhatte das Material eine Shore A Härte von 85 (60 Shore D).

Beispiel 4: Formulierung eines weichen Materials (für z.B. Dichtstoffe, Waterproofing Membranes, Treibstoff-beständige Beschichtungen)

5 g Addukt (A) = Komponente 1
15 g Thioplast® G44 Polysulfid von AkzoNobel (Vernetzer auf Polysulfidbasis) mit 110 mg N-Methyldicyclohexylamin (Katalysator) = Komponente 2

Komponente 1 wurde mit Komponente 2 gemischt. Nach 16h Aushärtung bei Raumtemperatur hatte das Material eine Shore A Härte von 46.

Beispiel 5: Aushärtung eines oligomeren, Neopentylglycoldiacrylat basierten Addukts

9 g Addukt (D) = Komponente 1
10 g Pentaerythritol-tetrakis-(3-mercapto-propionat) (Vernetzer) mit 240 mg N-Methyldicyclohexylamin (Katalysator) = Komponente 2

Komponente 1 wurde mit Komponente 2 gemischt. Nach 2h Aushärtung bei Raumtemperatur hatte das Material eine Shore A Härte von 80 (57 Shore D).

Beispiel 6: Aushärtung eines monomeren Addukts:

7,3 g Addukt (B) = Komponente 1
5,5 g Penta-erythritol-tetrakis- (3-mercapto-propionat) (Vernetzer) mit 50 mg N-Methyldicyclohexylamin (Katalysator) = Komponente 2

Komponente 1 wurde mit Komponente 2 gemischt. Nach 2 Tagen Aushärtung bei Raumtemperatur hatte das Material eine Shore A Härte von 59.

Beispiel 7: Formulierung eines transparenten Hybridmaterials auf Silicabasis

6 g Addukt (B), 6 g Pentaerithritoltriacrylat (Reaktivverdünner, Netzwerkbildner) und 0,5 g Wasser = Komponente 1
14,4 g Pentaerythritol-tetrakis-(3-mercapto-propionat) (Vernetzer), 4 g Mercaptopropyltriethoxysilan, 50 mg N-Methyldicyclohexylamin (Katalysator) und 120 mg TEGO Airex® 940 (Entlüfter) = Komponente 2

Komponente 1 wurde mit Komponente 2 gemischt. Nach 1 Tag Aushärtung bei Raumtemperatur hatte das Hybridmaterial eine Shore A Härte von 71. Das Material war klar und transparent.

Beispiel 8: Aushärtung eines monomeren, auf Dipentaerythritol-penta-/hexaacrylat basierten Addukts

9,02 g Addukt (F) = Komponente 1
10,53 g Penta-erythritol-tetrakis-(3-mercapto-propionat) (Vernetzer) mit 200 mg N-Methyldicyclohexylamin (Katalysator) = Komponente 2

Komponente 1 wurde mit Komponente 2 gemischt.
Nach 2 Tagen Aushärtung bei 60°C hatte das Material eine Shore A Härte von 50.

Beispiel 9: Vergleichsversuch zwischen einem erfindungsgemäßen System und einem Acrylatbasierten System nach dem Stand der Technik, beide Systeme mit Thiol gehärtet.

Als Vergleichssystem nach dem Stand der Technik wurde Pentaerithritoltriacrylat als Acrylatkomponente gewählt, da dieses Molekül zu festen Materialien ausgehärtet werden kann. Weiterhin ermöglicht es den Vergleich mit einem erfindungsgemäßen Addukt mit gleicher Doppelbindungszahl und somit gleichem SH- zu C=C-Verhältnis in der Formulierung. Die Adhäsionskraft der Materialien kann so direkt verglichen werden.

(X) = Addukt (E)

(Y) = Pentaerithritoltriacrylat

(X) sowie (Y) wurden mit Pentaerythritol-tetrakis- (3-mercapto-propionat) vernetzt bei einem Verhältnis von SH / C=C von 0,94 und exemplarisch die Haftung auf Stahl ermittelt. Haftzuganker wurden gezogen nach DIN EN 13596 und die maximalen Haft-Zug-Spannungen ermittelt.
nach 1 Tag Aushärtung bei Raumtemperatur:

(X) basiertes Harz: 0,270 $N/mm^2$ (Durchschnitt aus 6 Messungen)
(Y) basiertes Harz: 0,181 $N/mm^2$ (Durchschnitt aus 6 Messungen)

Nach 14 Tagen Aushärtung bei Raumtemperatur:

(X) basiertes Harz: 0,297 $N/mm^2$ (Durchschnitt aus 3 Messungen)
(Y) basiertes Harz: 0,166 $N/mm^2$ (Durchschnitt aus 3 Messungen)

Als Resultat führt der Einsatz des erfindungsgemäßen Systems in den beschriebenen additionsvernetzenden Systemen zu signifikant höhere Haftungseigenschaften verglichen mit dem Acrylate-System nach dem Stand der Technik.

## Patentansprüche

**1.** Beschichtungsmassen, enthaltend

- mindestens eine Verbindung (S) mit mindestens zwei $\alpha$-(1' -Hydroxyalkyl)acrylatgruppen,
- Optional mindestens eine Verbindung (S1) mit einer $\alpha$-(1'-Hydroxyalkyl)acrylatgruppe,
- mindestens eine Verbindung (C), die mindestens zwei Thiolgruppen trägt,
- optional mindestens einen Reaktivverdünner (D) mit einem zahlenmittleren Molekulargewicht $M_n$ von weniger als 1000 g/mol, der mindestens zwei (Meth)Acrylatgruppen aufweist,
- optional mindestens einen Katalysator (E), der die Anlagerung von Thiolgruppen an Acrylatgruppen zu beschleunigen vermag, und
- optional mindestens einen Photoinitiator (F).

**2.** Beschichtungsmassen gemäß Anspruch 1, **dadurch gekennzeichnet, dass** Verbindung (S) mindestens eine Verbindung (S2) umfasst, erhältlich durch Umsetzung eines mehrfunktionellen Acrylats (IV) mit einer monofunktionellen Carbonylverbindung (II)

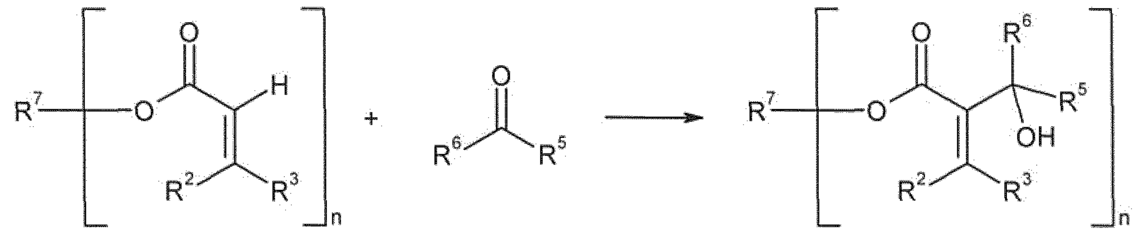

(IV) (II) (V)

oder durch Umsetzung eines monofunktionellen Acrylats (I) mit einer di- oder höherfunktionellen Carbonylverbindung (VI)

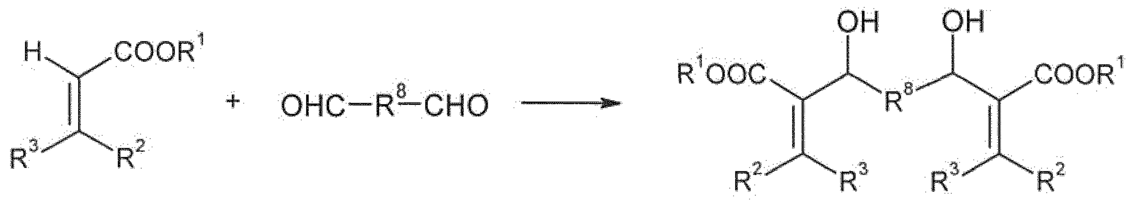

(I) (VI) (VII)

worin

$R^1$, $R^2$ und $R_3$ unabhängig voneinander $C_1$-$C_{18}$-Alkyl, gegebenenfalls durch ein oder mehrere Sauerstoff- und/oder Schwefelatome und/oder ein oder mehrere substituierte oder unsubstituierte Iminogruppen unterbrochenes $C_2$-$C_{18}$-Alkyl, $C_2$-$C_{18}$-Alkenyl, $C_6$-$C_{12}$-Aryl, $C_5$-$C_{12}$-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können,
$R^2$ und/oder $R^3$ zusätzlich Wasserstoff, gegebenenfalls durch Aryl, Alkyl, Aryloxy, Alkyloxy, Heteroatome und/oder Heterocyclen substituiertes $C_1$-$C_{18}$-Alkoxy oder -$COOR^4$,
$R^2$ kann zusätzlich zusammen mit $R^1$ einen Ring bilden, in diesem Fall kann $R^2$ eine Carbonylgruppe bedeuten, so dass die Gruppe $COOR^1$ und $R^2$ gemeinsam eine Säureanhydridgruppe -(CO)-O-(CO)- bilden,
$R^4$ hat die gleiche Bedeutung wie für $R^1$ aufgeführt, kann jedoch von diesem verschieden sein,
$R^5$ und $R^6$ unabhängig voneinander Wasserstoff, $C_1$-$C_{18}$-Alkyl, gegebenenfalls durch ein oder mehrere Sauerstoff- und/oder Schwefelatome und/oder ein oder mehrere substituierte oder unsubstituierte Iminogruppen unterbrochenes $C_2$-$C_{18}$-Alkyl, $C_2$-$C_{18}$-Alkenyl, $C_6$-$C_{12}$-Aryl, $C_5$-$C_{12}$-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, oder können gemeinsam einen Ring bilden,
n eine positive ganze Zahl von 2 bis 10,
$R^7$ einen n-wertigen organischen Rest mit 1 bis 50 Kohlenstoffatomen, der unsubstituiert oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxy oder hydroxysubstituiertem $C_1$-$C_8$-Alkyl substituiert sein und/oder eine oder mehrere -(CO)-, -O(CO)O-, -(NH)(CO)O-, -O(CO)(NH)-, -O(CO)- oder -(CO)O-Gruppen aufweisen kann und
$R^8$ bedeutet unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_6$-$C_{12}$-Arylen, $C_3$-$C_{12}$-Cycloalkylen, $C_1$-$C_{20}$-Alkylen oder durch ein- oder mehrere Sauerstoff- und/oder Schwefelatome und/oder ein oder mehrere substituierte oder unsubstituierte Iminogruppen und/oder durch eine oder mehrere-(CO)-, -O(CO)O-, -(NH)(CO)O-, -O(CO)(NH)-, -O(CO)- oder -(CO)O-Gruppen unterbrochenes $C_2$-$C_{20}$-Alkylen oder eine Einfachbindung.

3. Beschichtungsmassen gemäß Anspruch 2, **dadurch gekennzeichnet, dass** Verbindung (IV) ausgewählt ist aus der Gruppe bestehend aus Ethylenglykoldiacrylat, 1,2-Propandioldiacrylat, 1,3-Propandioldiacrylat, 1,4-Butandiol-

diacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, oder von Polyesterpolyolen, Polyetherolen, Poly-THF mit einer Molmasse zwischen 162 und 2000 g/mol, Poly-1,3-Propandiol mit einer Molmasse zwischen 134 und 1178 g/mol, Polyethylenglykol mit einer Molmasse zwischen 106 und 898 g/mol, sowie Urethanacrylate oder Polycarbonatacrylate.

4. Beschichtungsmassen gemäß Anspruch 2 oder 3, **dadurch gekennzeichnet, dass** es sich bei Verbindungen (II) und (VI) um aromatische Aldehyde handelt.

5. Beschichtungsmassen gemäß Anspruch 1, **dadurch gekennzeichnet, dass** Verbindung (S) mindestens eine Verbindung (Sz) umfasst, erhältlich durch Umsetzung mindestens einer difunktionellen Carbonylverbindung (A2) und/oder mindestens einer mehr als difunktionellen Carbonylverbindung (Ax) mit mindestens einer difunktionellen Acrylatverbindung (B2) und/oder mindestens einer mehr als difunktionellen Acrylatverbindung (By).

6. Beschichtungsmassen gemäß Anspruch 5, **dadurch gekennzeichnet, dass** Verbindung (S) mindestens eine Verbindung (Sz) umfasst, erhältlich durch Umsetzung mindestens einer difunktionellen Carbonylverbindung (A2) mit mindestens einer difunktionellen Acrylatverbindung (B2).

7. Beschichtungsmassen gemäß Anspruch 5 oder 6, **dadurch gekennzeichnet, dass** Verbindung (A2) ausgewählt ist aus der Gruppe bestehend aus Glyoxal, Malondialdehyd, Succinaldehyd, Glutaraldehyd, Capronaldehyd, Furan-2,5-dialdehyd, Pyrrol-2,5-dialdehyd, Pyridin-2,6-dialdehyd, Phthalaldehyd, Isophthalaldehyd und Terephthalaldehyd.

8. Beschichtungsmassen gemäß einem der Ansprüche 5 bis 7, **dadurch gekennzeichnet, dass** Verbindung (B2) ausgewählt ist aus der Gruppe bestehend aus Ethylenglykoldiacrylat, 1,2-Propandioldiacrylat, 1,3-Propandioldiacrylat, 1,4-Butandioldiacrylat und 1,6-Hexandioldiacrylat.

9. Beschichtungsmassen gemäß einem der Ansprüche 5 bis 7, **dadurch gekennzeichnet, dass** Verbindung (By) ausgewählt ist aus der Gruppe bestehend aus Trimethylolpropantriacrylat, Glycerintriacrylat, Pentaerythrittriacrylat, Pentaerythrittetraacrylat, Triacrylat von ein- bis zwanzigfach ethoxyliertem Trimethylolpropan sowie Tetraacrylat von ein- bis zwanzigfach ethoxyliertem Pentaerythrit.

10. Beschichtungsmassen gemäß einem der vorstehenden Ansprüche, **dadurch gekennzeichnet, dass** es sich bei den Verbindungen (C) um Verbindungen (C1) der Formel

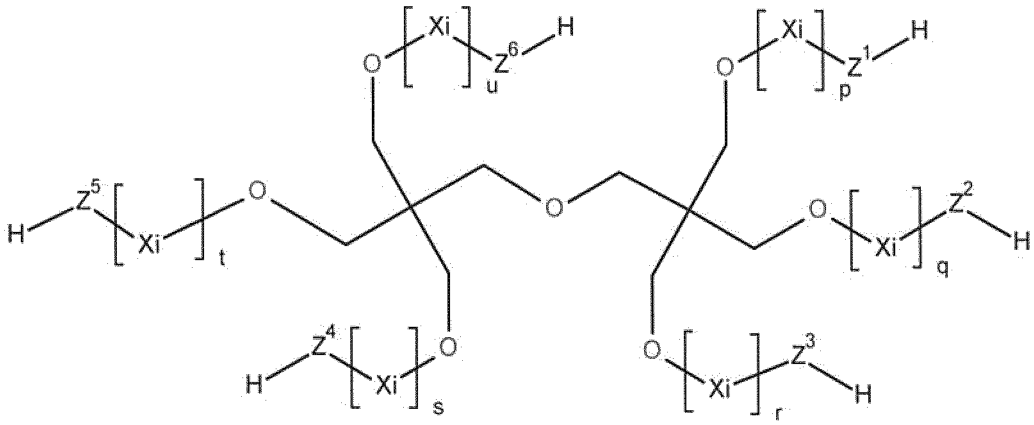

oder um Verbindungen (C2) der Formel

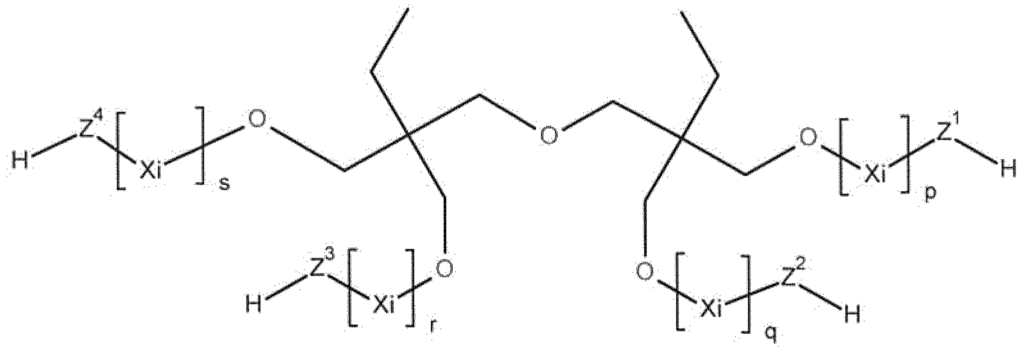

oder um Verbindungen (C3) der Formel

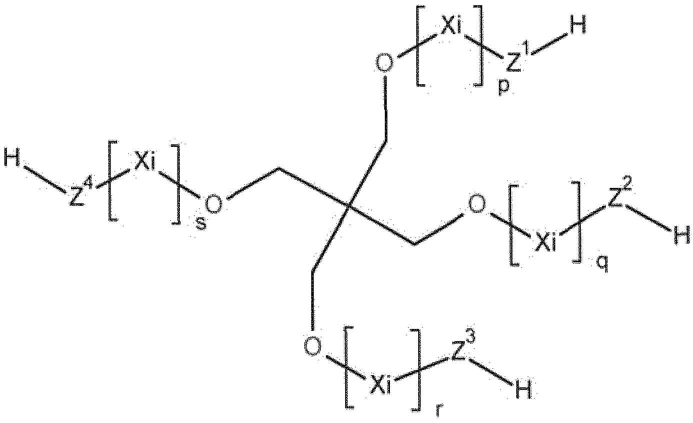

handelt, worin

$Z^1$, $Z^2$, $Z^3$, $Z^4$, $Z^5$ und $Z^6$ jeweils unabhängig voneinander eine Einfachbindung oder einen Rest der Formel $-(C=O)-R^3-S-$,
$R^3$ einen zweiwertigen $C_1$- bis $C_6$-Alkylenrest,
p, q, r, s, t, u, jeweils unabhängig voneinander Null oder eine positive ganze Zahl von 1 bis 5,
jedes $X_i$ für i = 1 bis p, 1 bis q, 1 bis r, 1 bis s, 1 bis t und 1 bis u, unabhängig voneinander ausgewählt sein kann aus der Gruppe bestehend aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$,
worin Ph für Phenyl und Vin für Vinyl steht,
mit der Maßgabe, dass im Fall der Verbindungen (C1) mindestens vier der Reste $Z^1$ bis $Z^6$ eine Gruppe der Formel $-(C=O)-R^3-S-$ darstellen und im Fall der Verbindungen (C2) und (C3) mindestens drei Reste $Z^1$ bis $Z^4$ eine Gruppe der Formel $-(C=O)-R^3-S-$ darstellen.

**11.** Beschichtungsmassen gemäß einem Ansprüche 1 bis 9, **dadurch gekennzeichnet, dass** es sich bei den Verbindungen (C) um Verbindungen (C4) der Funktionalität zwei oder drei der Formel

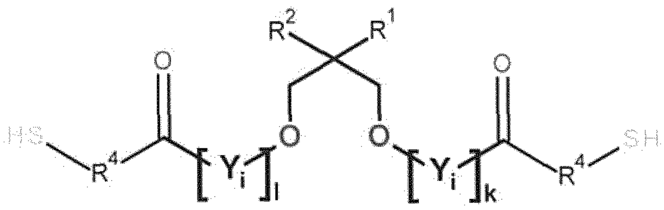

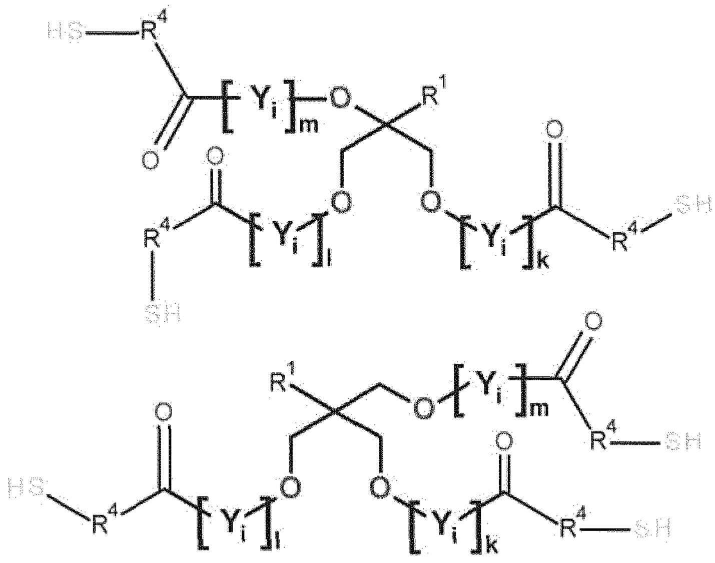

handelt, worin

$R^1$, $R^2$ jeweils unabhängig voneinander Wasserstoff oder einen $C_1$- bis $C_4$-Alkylrest,
$R^4$ Methylen oder 1,2-Ethylen,
k, l, m, n, jeweils unabhängig voneinander Null oder eine positive ganze Zahl von 1 bis 5,
jedes $Y_i$ für i = 1 bis k, 1 bis l, 1 bis m und 1 bis n, unabhängig voneinander ausgewählt sein kann aus der Gruppe bestehend aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$,
worin Ph für Phenyl und Vin für Vinyl steht.

**12.** Beschichtungsmassen gemäß einem der vorstehenden Ansprüche, **dadurch gekennzeichnet, dass** Verbindung (C) ausgewählt ist aus der Gruppe bestehend aus Ethylenglykoldi-(3-mercaptopropionat) (GDMP), Trimethylolpropan tri-(3-mercapto-propionat) (TMPMP), Trimethylolpropan trimercaptoacetat (TMPMA), 3-Mercaptopropionsäureester von Poly-1,2-propylenglykol der Molmasse 500 bis 2500 g/mol oder 3-Mercaptopropionsäureester von ethoxyliertem Trimethylolpropan der Molmasse bis zu 1500 g/mol, Pentaerythritoltetra-(3-mercaptopropionat) (PETMP), Pentaerythritoltetramercaptoacetat (PETMA), Di-Pentaerythritoltetra-(3-mercapto-propionat), Di-Pentaerythritoltetramercaptoacetat, Di-Pentaerythritolpenta-(3-mercapto-propionat), Di-Pentaerythritolpentamercaptoacetat, Di-Pentaerythritolhexa-(3-mercapto-propionat), Di-Pentaerythritolhexamercaptoacetat, Di-Trimethylolpropantetra-(3-mercapto-propionat), Di-Trimethylolpropantetramercaptoacetat sowie deren alkoxylierten Produkten.

**13.** Beschichtungsmassen gemäß einem der vorstehenden Ansprüche, **dadurch gekennzeichnet, dass** der Katalysator (E) ausgewählt ist aus der Gruppe bestehend aus primären, sekundären und tertiären Aminen, primären, sekundären und tertiären Phosphinen, quaternären Ammonium- oder Phosphoniumsalze, Iminen und Iminiumsalzen.

**14.** Verwendung von Beschichtungsmassen gemäß einem der vorstehenden Ansprüche als Klebstoff.

**15.** Verfahren zur Herstellung von Beschichtungsmassen gemäß einem der Ansprüche 1 bis 13, **dadurch gekennzeichnet, dass** die Komponenten (S) und (C), sowie optional zusätzlich die Komponenten (D) und/oder (F) sowie optional weitere Additive, vermischt werden.

**16.** Verfahren zur Härtung von Beschichtungsmassen gemäß einem der Ansprüche 1 bis 13, **dadurch gekennzeichnet, dass** die Umgebungstemperatur nicht mehr als 5 °C beträgt.

## Claims

**1.** Coating compositions comprising

- at least one compound (S) having at least two α-(1'-hydroxyalkyl)acrylate groups,
- optionally at least one compound (S1) having one α-(1'-hydroxyalkyl)acrylate group,
- at least one compound (C) which carries at least two thiol groups,
- optionally at least one reactive diluent (D) having a number-average molecular weight $M_n$ of less than 1000 g/mol and having at least two (meth)acrylate groups,
- optionally at least one catalyst (E) which is able to accelerate the addition of thiol groups onto acrylate groups, and
- optionally at least one photoinitiator (F).

2. Coating compositions according to Claim 1, **characterized in that** compound (S) comprises at least one compound (S2) obtainable by reaction of a polyfunctional acrylate (IV) with a monofunctional carbonyl compound (II)

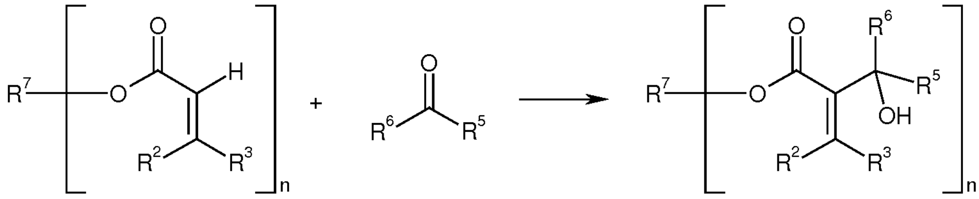

(IV) (II) (V)

or by reaction of a monofunctional acrylate (I) with a carbonyl compound (VI) having a functionality of two or more

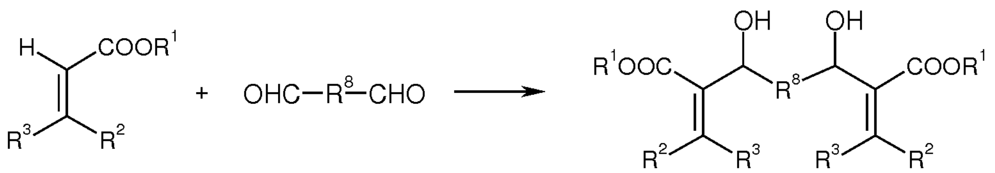

(I) (VI) (VII)

in which

$R^1$, $R^2$, and $R^3$ independently of one another are $C_1$-$C_{18}$-alkyl, a radical which is optionally interrupted by one or more oxygen atoms and/or sulfur atoms and/or by one or more substituted or unsubstituted imino groups and is $C_2$-$C_{18}$-alkyl, $C_2$-$C_{18}$-alkenyl, $C_6$-$C_{12}$-aryl, $C_5$-$C_{12}$-cycloalkyl, or a five- to six-membered heterocycle with oxygen, nitrogen and/or sulfur atoms, it being possible for the stated radicals to be substituted in each case by aryl, alkyl, aryloxy, alkyloxy, heteroatoms and/or heterocycles,
$R^2$ and/or $R^3$ additionally are hydrogen, $C_1$-$C_{18}$-alkoxy optionally substituted by aryl, alkyl, aryloxy, alkyloxy, heteroatoms and/or heterocycles, or $-COOR^4$,
$R^2$ may additionally, together with $R^1$, form a ring, in which $R^2$ may be a carbonyl group, and so the group $COOR^1$ and $R^2$ together form an acid anhydride group -(CO)-O-(CO)-,
$R^4$ has the same definition as listed for $R^1$, but may be different from $R^1$,
$R^5$ and $R^6$ independently of one another are hydrogen, $C_1$-$C_{18}$-alkyl, a radical which is optionally interrupted by one or more oxygen atoms and/or sulfur atoms and/or by one or more substituted or unsubstituted imino groups and is $C_2$-$C_{18}$-alkyl, $C_2$-$C_{18}$-alkenyl, $C_6$-$C_{12}$-aryl, $C_5$-$C_{12}$-cycloalkyl, or a five-to six-membered heterocycle with oxygen, nitrogen and/or sulfur atoms, it being possible for the stated radicals to be substituted in each case by aryl, alkyl, aryloxy, alkyloxy, heteroatoms and/or heterocycles, or to together form a ring,
n is a positive integer from 2 to 10,
$R^7$ is an n-valent organic radical having 1 to 50 carbon atoms, which may be unsubstituted or substituted by halogen, $C_1$-$C_8$-alkyl, $C_2$-$C_8$-alkenyl, carboxyl, carboxy-$C_1$-$C_8$-alkyl, $C_1$-$C_{20}$-acyl, $C_1$-$C_8$-alkoxy, $C_6$-$C_{12}$-aryl, hydroxyl or hydroxyl-substituted $C_1$-$C_8$-alkyl, and/or may have one or more -(CO)-, -O(CO)O-, -(NH)(CO)O-, -O(CO)(NH)-, -O(CO)-, or -(CO)O-groups, and
$R^8$ is a radical which is unsubstituted or substituted by halogen, $C_1$-$C_8$-alkyl, $C_2$-$C_8$-alkenyl, carboxyl, carboxy-$C_1$-$C_8$-alkyl, $C_1$-$C_{20}$-acyl, $C_1$-$C_8$-alkoxy, $C_6$-$C_{12}$-aryl, hydroxyl or hydroxyl-substituted $C_1$-$C_8$-alkyl and is $C_6$-$C_{12}$-arylene, $C_3$-$C_{12}$-cycloalkylene, $C_1$-$C_{20}$-alkylene, or $C_2$-$C_{20}$-alkylene interrupted by one or more oxygen

atoms and/or sulfur atoms and/or by one or more substituted or unsubstituted imino groups and/or by one or more -(CO)-, -O(CO)O-, -(NH)(CO)O-, -O(CO)(NH)-, -O(CO)-, or -(CO)O- groups, or is a single bond.

**3.** Coating compositions according to Claim 2, **characterized in that** compound (IV) is selected from the group consisting of ethylene glycol diacrylate, 1,2-propanediol diacrylate, 1,3-propanediol diacrylate, 1,4-butanediol diacrylate, 1,3-butanediol diacrylate, 1,5-pentanediol diacrylate, 1,6-hexanediol diacrylate, 1,8-octanediol diacrylate, neopentyl glycol diacrylate, 1,1-, 1,2-, 1,3-, and 1,4-cyclohexanedimethanol diacrylate, 1,2-, 1,3-, or 1,4-cyclohexanediol diacrylate, trimethylolpropane triacrylate, ditrimethylolpropane pentaacrylate or hexaacrylate, pentaerythritol triacrylate or tetraacrylate, glycerol diacrylate or triacrylate, and also diacrylates and polyacrylates of sugar alcohols, or of polyester polyols, polyetherols, polyTHF having a molar mass of between 162 and 2000 g/mol, poly-1,3-propanediol having a molar mass of between 134 and 1178 g/mol, polyethylene glycol having a molar mass of between 106 and 898 g/mol, and also urethane acrylates or polycarbonate acrylates.

**4.** Coating compositions according to Claim 2 or 3, **characterized in that** compounds (II) and (VI) are aromatic aldehdyes.

**5.** Coating compositions according to Claim 1, **characterized in that** compound (S) comprises at least one compound (Sz) obtainable by reaction of at least one difunctional carbonyl compound (A2) and/or at least one more-than-difunctional carbonyl compound (Ax) with at least one difunctional acrylate compound (B2) and/or at least one more-than-difunctional acrylate compound (By).

**6.** Coating compositions according to Claim 5, **characterized in that** compound (S) comprises at least one compound (Sz) obtainable by reaction of at least one difunctional carbonyl compound (A2) with at least one difunctional acrylate compound (B2).

**7.** Coating compositions according to Claim 5 or 6, **characterized in that** compound (A2) is selected from the group consisting of glyoxal, malondialdehyde, succinaldehyde, glutaraldehyde, capronaldehyde, furan-2,5-dialdehyde, pyrrole-2,5-dialdehyde, pyridine-2,6-dialdehyde, phthalaldehyde, isophthalaldehyde, and terephthalaldehyde.

**8.** Coating compositions according to any of Claims 5 to 7, **characterized by** that compound (B2) is selected from the group consisting of ethylene glycol diacrylate, 1,2-propanediol diacrylate, 1,3-propanediol diacrylate, 1,4-butanediol diacrylate, and 1,6-hexanediol diacrylate.

**9.** Coating compositions according to any of Claims 5 to 7, **characterized in that** compound (By) is selected from the group consisting of trimethylolpropane triacrylate, glycerol triacrylate, pentaerythritol triacrylate, pentaerythritol tetraacrylate, triacrylate of singly to vigintuply ethoxylated trimethylolpropane, and tetraacrylate of singly to vigintuply ethoxylated pentaerythritol.

**10.** Coating compositions according to any of the preceding claims, **characterized in that** the compounds (C) are compounds (C1) of the formula

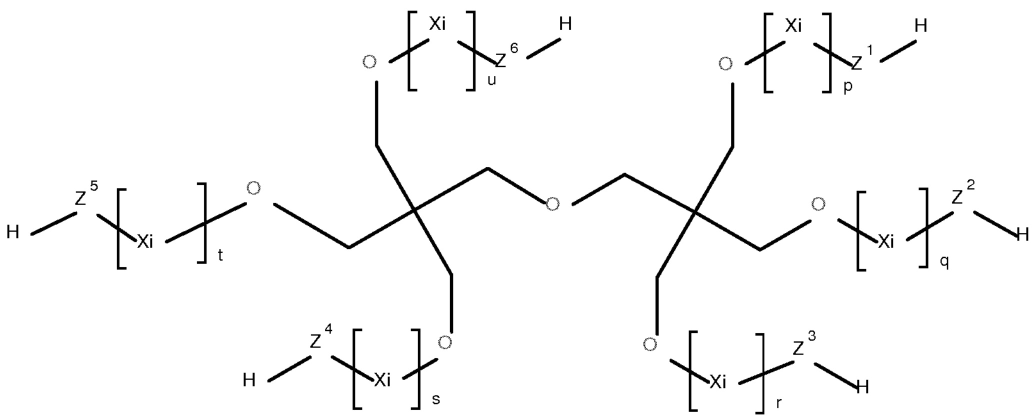

or compounds (C2) of the formula

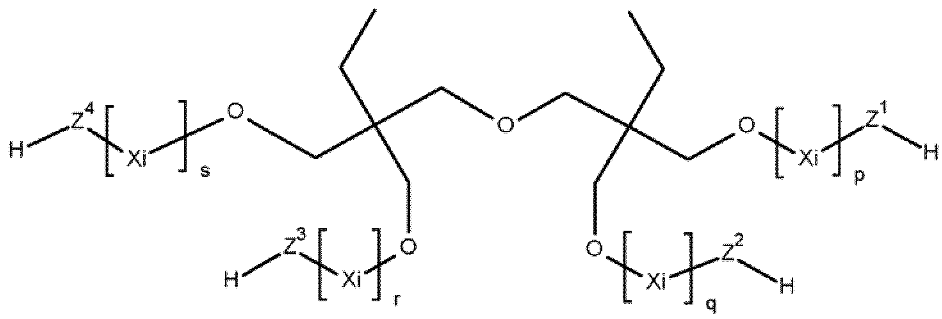

or compounds (C3) of the formula

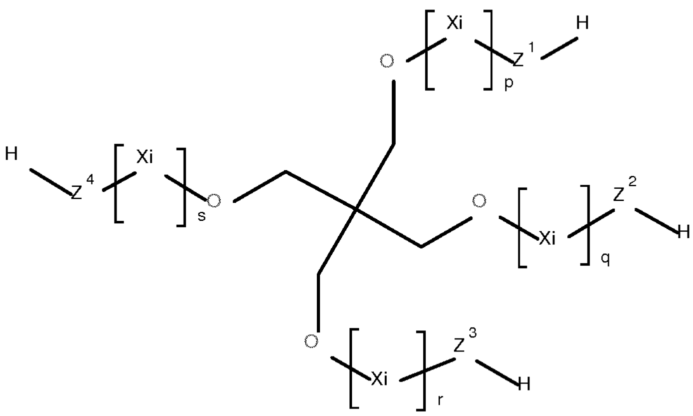

in which

$Z^1$, $Z^2$, $Z^3$, $Z^4$, $Z^5$, and $Z^6$ are each independently of one another a single bond or a radical of the formula $-(C=O)-R^3-S-$,
$R^3$ is a divalent $C_1$- to $C_6$-alkylene radical,
p, q, r, s, t, and u, in each case independently of one another, are zero or a positive integer from 1 to 5,
each $X_i$ for i = 1 to p, 1 to q, 1 to r, 1 to s, 1 to t, and 1 to u, independently of one another, may be selected from the group consisting of $-CH_2-CH_2-O-$, $-CH_2-CH(CH_3)-O-$, $-CH(CH_3)-CH_2-O-$, $-CH_2-C(-CH_3)_2-O-$, $-C(CH_3)_2-CH_2-O-$, $-CH_2-CHVin-O-$, $-CHVin-CH_2-O-$, $-CH_2-CHPh-O-$, and $-CHPh-CH_2-O-$, in which Ph is phenyl and Vin is vinyl,
with the proviso that in the case of the compounds (C1) at least four of the radicals $Z^1$ to $Z^6$ are a group of the formula $-(C=O)-R^3-S-$ and, in the case of the compounds (C2) and (C3), at least three radicals $Z^1$ to $Z^4$ are a group of the formula $-(C=O)-R^3-S-$.

11. Coating compositions according to any of Claims 1 to 9, **characterized in that** the compounds (C) are compounds (C4) with a functionality of two or three, of the formula

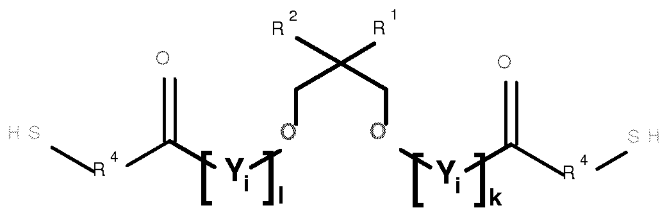

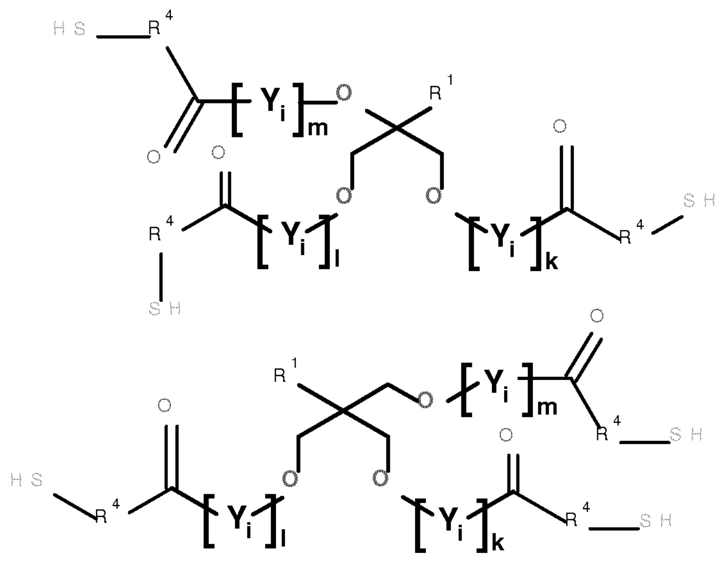

in which

$R^1$ and $R^2$, each independently of one another, are hydrogen or a $C_1$- to $C_4$-alkyl radical,
$R^4$ is methylene or 1,2-ethylene,
k, 1, m, and n, in each case independently of one another, are zero or a positive integer from 1 to 5,
each $Y_i$ for i = 1 to k, 1 to 1, 1 to m, and 1 to n, independently of one another, may be selected from the group consisting of $-CH_2-CH_2-O-$, $-CH_2-CH(CH_3)-O-$, $-CH (-CH_3)-CH_2-O-$, $-CH_2-C (-CH_3)_2-O-$, $-C (-CH_3)_2-CH_2-O-$, $-CH_2-CHVin-O-$, $-CHVin-CH_2-O-$, $-CH_2-CHPh-O-$, and $-CHPh-CH_2-O-$, in which Ph is phenyl and Vin is vinyl.

**12.** Coating compositions according to any of the preceding claims, **characterized in that** compound (C) is selected from the group consisting of ethylene glycol di(3-mercaptopropionate) (GDMP), trimethylolpropane tri(3-mercaptopropionate) (TMPMP), trimethylolpropane trimercaptoacetate (TMPMA), 3-mercaptopropionic ester of poly-1,2-propylene glycol with a molar mass of 500 to 2500 g/mol or 3-mercaptopropionic ester of ethoxylated trimethylolpropane with a molar mass of up to 1500 g/mol, pentaerythritol tetra(3-mercaptopropionate) (PETMP), pentaerythritol tetramercaptoacetate (PETMA), dipentaerythritol tetra(3-mercaptopropionate), dipentaerythritol tetramercaptoacetate, dipentaerythritol penta(3-mercaptopropionate), dipentaerythritol pentamercaptoacetate, dipentaerythritol hexa(3-mercaptopropionate), dipentaerythritol hexamercaptoacetate, ditrimethylolpropane tetra(3-mercaptopropionate), ditrimethylolpropane tetramer-captoacetate, and their alkoxylated products.

**13.** Coating compositions according to any of the preceding claims, **characterized in that** the catalyst (E) is selected from the group consisting of primary, secondary, and tertiary amines, primary, secondary, and tertiary phosphines, quaternary ammonium salts or phosphonium salts, imines, and iminium salts.

**14.** Use of coating compositions according to any of the preceding claims as an adhesive.

**15.** Process for preparing coating compositions according to any of Claims 1 to 13, **characterized in that** components (S) and (C), and also optionally additionally components (D) and/or (F) and also optionally further additives, are mixed.

**16.** Method for curing coating compositions according to any of Claims 1 to 13, **characterized in that** the ambient temperature is not more than 5°C.

## Revendications

**1.** Matériaux de revêtement, contenant :

- au moins un composé (S) contenant au moins deux groupes acrylate d'α-(1'-hydroxyalkyle),
- éventuellement au moins un composé (S1) contenant un groupe acrylate d'α-(1'-hydroxyalkyle),
- au moins un composé (C) qui porte au moins deux groupes thiol,

- éventuellement au moins un diluant réactif (D) ayant un poids moléculaire moyen en nombre $M_n$ de moins de 1 000 g/mol, qui comprend au moins deux groupes (méth)acrylate,
- éventuellement au moins un catalyseur (E), qui peut accélérer l'addition de groupes thiol sur des groupes acrylate, et
- éventuellement au moins un photoinitiateur (F).

**2.** Matériaux de revêtement selon la revendication 1, **caractérisés en ce que** le composé (S) comprend au moins un composé (S2), pouvant être obtenu par mise en réaction d'un acrylate polyfonctionnel (IV) avec un composé de carbonyle monofonctionnel (II)

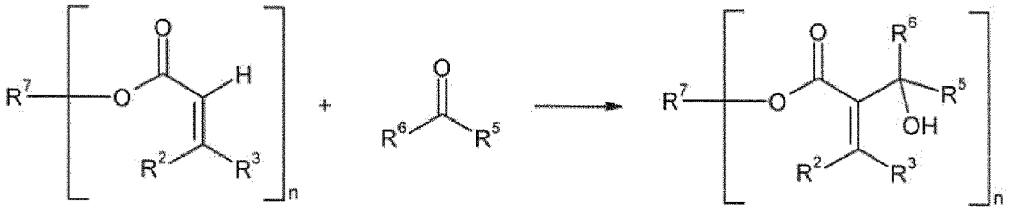

(IV) (II) (V)

ou par mise en réaction d'un acrylate monofonctionnel (I) avec un composé de carbonyle difonctionnel ou d'une fonctionnalité supérieure (VI)

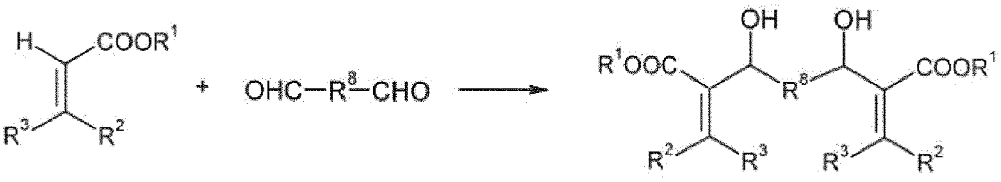

(I) (VI) (VII)

dans lesquels

$R^1$, $R^2$ et $R^3$ représentent indépendamment les uns des autres alkyle en $C_1$-$C_{18}$, alkyle en $C_2$-$C_{18}$ éventuellement interrompu par un ou plusieurs atomes d'oxygène et/ou de soufre et/ou un ou plusieurs groupes imino substitués ou non substitués ; alcényle en $C_2$-$C_{18}$, aryle en $C_6$-$C_{12}$, cycloalkyle en $C_5$-$C_{12}$ ou un hétérocycle de cinq à six éléments, comprenant des atomes d'oxygène, d'azote et/ou de soufre, les radicaux cités pouvant chacun être substitués par aryle, alkyle, aryloxy, alkyloxy, des hétéroatomes et/ou des hétérocycles,
$R^2$ et/ou $R^3$ peuvent en outre représenter hydrogène, alcoxy en $C_1$-$C_{18}$ éventuellement substitué par aryle, alkyle, aryloxy, alkyloxy, des hétéroatomes et/ou des hétérocycles ; ou -$COOR^4$,
$R^2$ peut en outre former conjointement avec $R^1$ un cycle, $R^2$ pouvant dans ce cas signifier un groupe carbonyle, de sorte que le groupe $COOR^1$ et $R^2$ forment ensemble un groupe anhydride d'acide -(CO)-O-(CO)-,
$R^4$ a la même signification que $R^1$, mais peut toutefois être différent de celui-ci,
$R^5$ et $R^6$ représentent indépendamment l'un de l'autre hydrogène, alkyle en $C_1$-$C_{18}$, alkyle en $C_2$-$C_{18}$ éventuellement interrompu par un ou plusieurs atomes d'oxygène et/ou de soufre et/ou un ou plusieurs groupes imino substitués ou non substitués ; alcényle en $C_2$-$C_{18}$, aryle en $C_6$-$C_{12}$, cycloalkyle en $C_5$-$C_{12}$ ou un hétérocycle de cinq à six éléments, comprenant des atomes d'oxygène, d'azote et/ou de soufre, les radicaux cités pouvant chacun être substitués par aryle, alkyle, aryloxy, alkyloxy, des hétéroatomes et/ou des hétérocycles, ou pouvant ensemble former un cycle,
n représente un nombre entier positif de 2 à 10,
$R^7$ représente un radical organique n-valent de 1 à 50 atomes de carbone, qui peut être non substitué ou substitué avec halogène, alkyle en $C_1$-$C_8$, alcényle en $C_2$-$C_8$, carboxy, carboxy-alkyle en $C_1$-$C_8$, acyle en $C_1$-$C_{20}$, alcoxy en $C_1$-$C_8$, aryle en $C_6$-$C_{12}$, hydroxy ou alkyle en $C_1$-$C_8$ à substitution hydroxy, et/ou qui peut comprendre un ou plusieurs groupes -(CO)-, -O(CO)O-, -(NH)(CO)O-,-O(CO)(NH)-, -O(CO)- ou -(CO)O-, et
$R^8$ signifie arylène en $C_6$-$C_{12}$ non substitué ou substitué avec halogène, alkyle en $C_1$-$C_8$, alcényle en $C_2$-$C_8$,

carboxy, carboxy-alkyle en $C_1$-$C_8$, acyle en $C_1$-$C_{20}$, alcoxy en $C_1$-$C_8$, aryle en $C_6$-$C_{12}$, hydroxyle ou alkyle en $C_1$-$C_8$ à substitution hydroxy ; cycloalkylène en $C_3$-$C_{12}$, alkylène en $C_1$-$C_{20}$ ou alkylène en $C_2$-$C_{20}$ interrompu par un ou plusieurs atomes d'oxygène et/ou de soufre et/ou un ou plusieurs groupes imino substitués ou non substitués et/ou par un ou plusieurs groupes -(CO)-, -O(CO)O-,-(NH)(CO)O-, -O(CO)(NH)-, -O(CO)- ou -(CO)O-, ou une liaison simple.

**3.** Matériaux de revêtement selon la revendication 2, **caractérisés en ce que** le composé (IV) est choisi dans le groupe constitué par le diacrylate d'éthylène glycol, le diacrylate de 1,2-propane diol, le diacrylate de 1,3-propanediol, le diacrylate de 1,4-butanediol, le diacrylate de 1,3-butanediol, le diacrylate de 1,5-pentanediol, le diacrylate de 1,6-hexanediol, le diacrylate de 1,8-octanediol, le diacrylate de néopentylglycol, le diacrylate de 1,1-, 1,2-, 1,3- et 1,4-cyclohexanediméthanol, le diacrylate de 1,2-, 1,3- ou 1,4-cyclohexanediol, le triacrylate de triméthylolpropane, le penta- ou hexaacrylate de ditriméthylolpropane, le tri- ou tétraacrylate de pentaérythrite, le di- ou triacrylate de glycérine, ainsi que les di- et polyacrylates de sucres-alcools, ou de polyester-polyols, de polyétherols, de poly-THF ayant une masse molaire comprise entre 162 et 2 000 g/mol, de poly-1,3-propanediol ayant une masse molaire comprise entre 134 et 1 178 g/mol, de polyéthylène glycol ayant une masse molaire comprise entre 106 et 898 g/mol, ainsi que les acrylates d'uréthane ou les acrylates de polycarbonate.

**4.** Matériaux de revêtement selon la revendication 2 ou 3, **caractérisés en ce que** les composés (II) et (VI) sont des aldéhydes aromatiques.

**5.** Matériaux de revêtement selon la revendication 1, **caractérisés en ce que** le composé (S) comprend au moins un composé (Sz), pouvant être obtenu par mise en réaction d'au moins un composé de carbonyle bifonctionnel (A2) et/ou d'au moins composé de carbonyle plus que bifonctionnel (Ax) avec au moins un composé d'acrylate bifonctionnel (B2) et/ou au moins un composé d'acrylate plus que bifonctionnel (By).

**6.** Matériaux de revêtement selon la revendication 5, **caractérisés en ce que** le composé (S) comprend au moins un composé (Sz), pouvant être obtenu par mise en réaction d'au moins un composé de dicarbonyle bifonctionnel (A2) avec au moins un composé d'acrylate bifonctionnel (B2).

**7.** Matériaux de revêtement selon la revendication 5 ou 6, **caractérisés en ce que** le composé (A2) est choisi dans le groupe constitué par le glyoxal, le malone-dialdéhyde, le succinaldéhyde, le glutaraldéhyde, le capronaldéhyde, le furane-2,5-dialdéhyde, le pyrrole-2,5-dialdéhyde, le pyridine-2,6-dialdéhyde, le phtalaldéhyde, l'isophtalaldéhyde et le téréphtalaldéhyde.

**8.** Matériaux de revêtement selon l'une quelconque des revendications 5 à 7, **caractérisés en ce que** le composé (B2) est choisi dans le groupe constitué par le diacrylate d'éthylène glycol, le diacrylate de 1,2-propanediol, le diacrylate de 1,3-propanediol, le diacrylate de 1,4-butanediol et le diacrylate de 1,6-hexanediol.

**9.** Matériaux de revêtement selon l'une quelconque des revendications 5 à 7, **caractérisés en ce que** le composé (By) est choisi dans le groupe constitué par le triacrylate de triméthylolpropane, le triacrylate de glycérine, le triacrylate de pentaérythrite, le tétraacrylate de pentaérythrite, le triacrylate de triméthylolpropane éthoxylé une à vingt fois, ainsi que le tétraacrylate de pentaérythrite éthoxylé une à vingt fois.

**10.** Matériaux de revêtement selon l'une quelconque des revendications précédentes, **caractérisés en ce que** les composés (C) sont des composés (C1) de formule

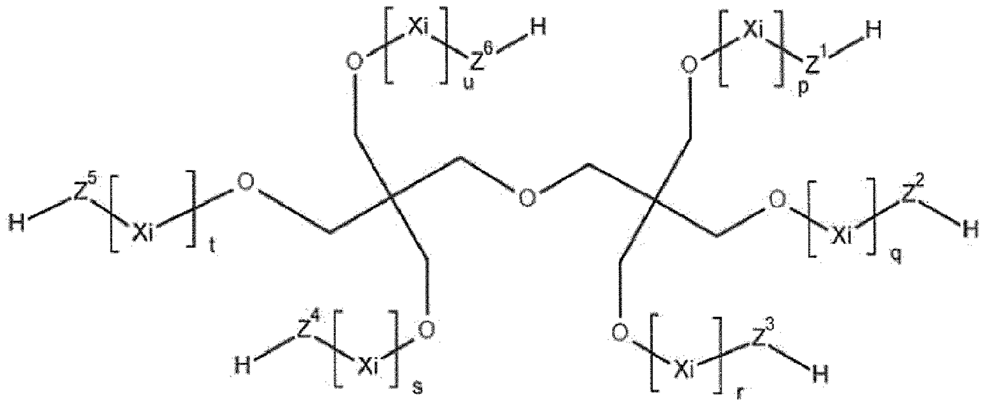

ou des composés (C2) de formule

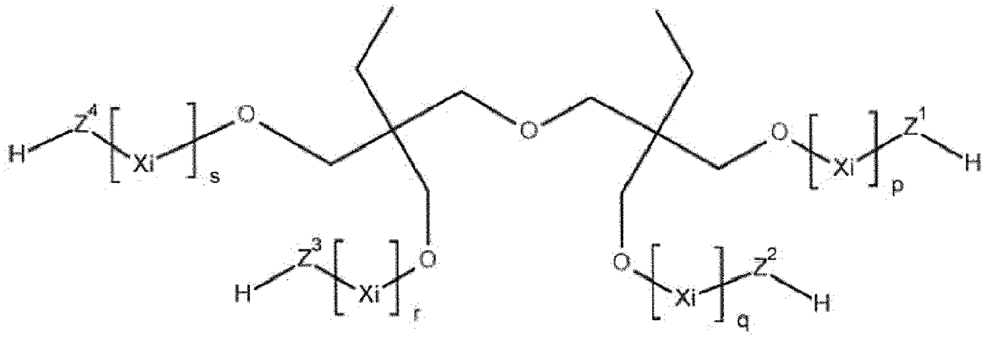

ou des composés (C3) de formule

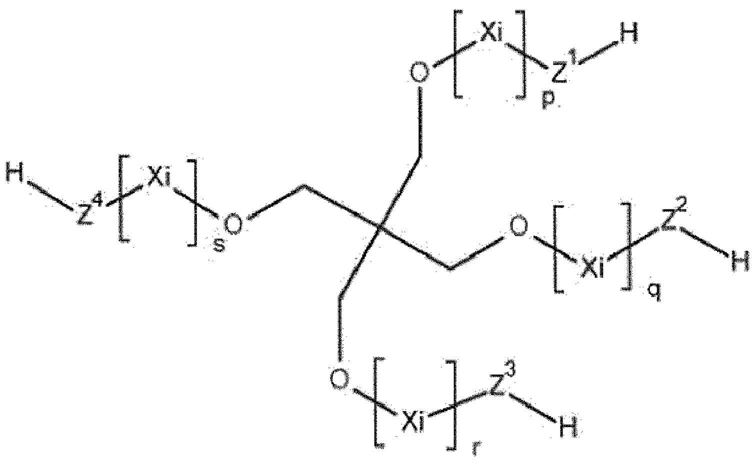

dans lesquelles

$Z^1$, $Z^2$, $Z^3$, $Z^4$, $Z^5$ et $Z^6$ représentent chacun indépendamment les uns des autres une liaison simple ou un radical de formule -(C=O)-$R^3$-S-,
$R^3$ représente un radical alkylène en $C_1$ à $C_6$ bivalent, p, q, r, s, t, u représentent chacun indépendamment les uns des autres zéro ou un nombre entier positif de 1 à 5,
les $X_i$ pour i = 1 à p, 1 à q, 1 à r, 1 à s, 1 à t et 1 à u, peuvent chacun être choisis indépendamment les uns des autres dans le groupe constitué par $-CH_2-CH_2-O-$, $-CH_2-CH(CH_3)-O-$, $-CH(-CH_3)-CH_2-O-$, $-CH_2-C(-CH_3)_2-O-$, $-C(-CH_3)_2-CH_2-O-$, $-CH_2-CHVin-O-$, $-CHVin-CH_2-O-$, $-CH_2-CHPh-O-$ et $-CHPh-CH_2-O$,
Ph représentant phényle et Vin vinyle,
à condition que, dans le cas des composés (C1), au moins quatre des radicaux $Z^1$ à $Z^6$ représentent un groupe de formule -C(=O)-$R^3$-S- et, dans le cas des composés (C2) et (C3), au moins trois des radicaux $Z^1$ à $Z^4$

représentent un groupe de formule -(C=O)-$R^3$-S-.

**11.** Matériaux de revêtement selon l'une quelconque des revendications 1 à 9, **caractérisés en ce que** les composés (C) sont des composés (C4) d'une fonctionnalité de deux ou trois, de formule

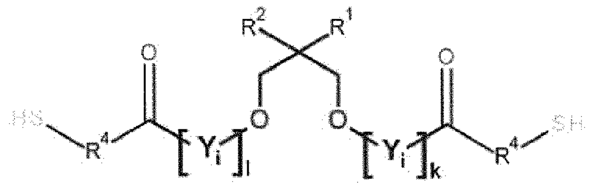

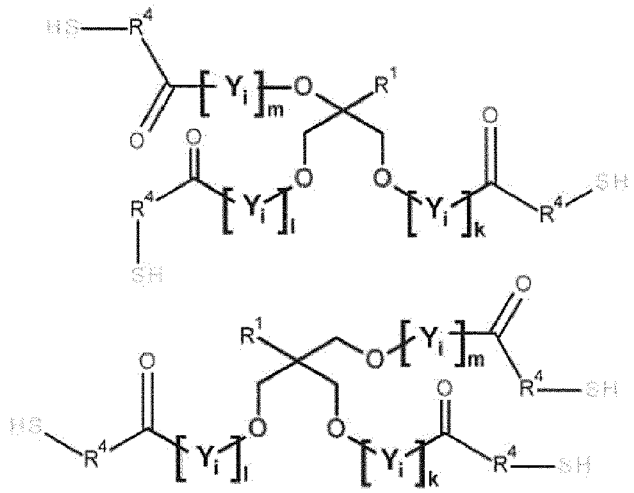

dans lesquelles

$R^1$, $R^2$ représentent chacun indépendamment l'un de l'autre hydrogène ou un radical alkyle en $C_1$ à $C_4$,
$R^4$ représente méthyle ou 1,2-éthylène,
k, 1, m, n représentent chacun indépendamment les uns des autres zéro ou un nombre entier positif de 1 à 5,
les $Y_i$ pour i = 1 à k, 1 à 1, 1 à m et 1 à n peuvent chacun être choisis indépendamment les uns des autres dans le groupe constitué par $-CH_2-CH_2-O-$, $-CH_2-CH(CH_3)-O-$, $-CH (CH_3) -CH_2-O-$, $-CH_2-C (CH_3) _2-O-$, $-C (CH_3) _2-CH_2-O-$, $-CH_2-CHVin-O-$, $-CHVin-CH_2-O-$, $-CH_2-CHPh-O-$ et $-CHPh-CH_2-O$,
Ph représentant phényle et Vin vinyle.

**12.** Matériaux de revêtement selon l'une quelconque des revendications précédentes, **caractérisés en ce que** le composé (C) est choisi dans le groupe constitué par le di-(3-mercaptopropionate) d'éthylène glycol (GDMP), le tri-(3-mercaptopropionate) de triméthylolpropane (TMPMP), le trimercaptoacétate de triméthylolpropane (TMPMA), l'ester de l'acide 3-mercapto-propionique de poly-1,2-propylène glycol d'une masse molaire de 500 à 2 500 g/mol ou l'ester de l'acide 3-mercapto-propionique de triméthylolpropane éthoxylé d'une masse molaire de jusqu'à 1 500 g/mol, le tétra-(3-mercaptopropionate) de pentaérythritol (PETMP), le tétramercaptoacétate de pentaérythritol (PETMA), le tétra-(3-mercapto-propionate) de di-pentaérythritol, le tétramercaptoacétate de di-pentaérythritol, le penta-(3-mercapopropionate) de di-pentaérythritol, le pentamercaptoacétate de di-pentaérythritol, l'hexa-(3-mercapto-propionate) de di-pentaérythritol, l'hexamercaptoacétate de di-pentaérythritol, le tétra-(3-mercapto-propionate) de di-triméthylolpropane, le tétramercaptoacétate de di-triméthylolpropane, ainsi que leurs produits alcoxylés.

**13.** Matériaux de revêtement selon l'une quelconque des revendications précédentes, **caractérisés en ce que** le catalyseur (E) est choisi dans le groupe constitué par les amines primaires, secondaires et tertiaires, les phosphines primaires, secondaires et tertiaires, les sels d'ammonium ou de phosphonium quaternaires, les imines et les sels d'iminium.

**14.** Utilisation de matériaux de revêtement selon l'une quelconque des revendications précédentes en tant qu'adhésif.

**15.** Procédé de fabrication de matériaux de revêtement selon l'une quelconque des revendications 1 à 13, **caractérisé**

**en ce que** les composants (S) et (C), ainsi qu'éventuellement en outre les composants (D) et/ou (F), ainsi qu'éventuellement d'autres additifs, sont mélangés.

16. Procédé de durcissement de matériaux de revêtement selon l'une quelconque des revendications 1 à 13, **caractérisé en ce que** la température ambiante n'est pas supérieure à 5 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6551710 B1
- EP 1275668 A
- US 5459173 A
- WO 2012126695 A
- WO 2005057286 A
- WO 2011141424 A
- US 5380901 A
- WO 9828252 A
- EP 7508 A
- EP 57474 A
- DE 19618720 A
- EP 495751 A
- EP 615980 A
- DE 19826712 A
- DE 19913353 A
- WO 9833761 A
- DE 19957900 A1


### In der Beschreibung aufgeführte Nicht-Patentliteratur


- **A.K. O’BRIAN ; N.B. CRAMER ; C.N. BOWMAN.** Oxygen inhibition in Thiol-Acrylate Photopolymerizations. *J. Polym. Sci., Part A: Polym. Chem.,* 2006, vol. 44, 2007-2014
- Ullmanns Encyklopädie der technischen Chemie. vol. 19, 62-65
- **H. FREY et al.** *Acta Polym.,* 1997, vol. 48, 30-35
- Advances in Polymer Science. Springer, 1974, vol. 14
- Polymer Handbook. Wiley & Sons